# FASCICULE DE BREVET EUROPEEN

(11) **EP 3 270 866 B1**
(45) Date de publication et mention de la délivrance du brevet: **09.01.2019**
(21) Numéro de dépôt: 16713555.7
(22) Date de dépôt: 17.03.2016
(51) Int. Cl.: A61J 1/10, A61J 1/18, G01M 3/02, B65D 77/04, G01M 3/32, G01M 3/22, A61J 1/14

(54) **POCHE MULTI-ENVELOPPES ET SYSTÈMES ET PROCÉDÉS DE DÉTECTION D'UNE ÉVENTUELLE PERTE D'INTÉGRITÉ D'UNE TELLE POCHE**
BEUTEL MIT MEHREREN UMSCHLÄGEN UND SYSTEME UND VERFAHREN ZUM ERKENNEN EINES MÖGLICHEN VERLUSTS DER INTEGRITÄT EINES DERARTIGEN BEUTELS
MULTI-ENVELOPE BAG AND SYSTEMS AND METHODS FOR DETECTING A POSSIBLE LOSS OF INTEGRITY OF SUCH A BAG

(30) Priorité: 19.03.2015 FR 1552263
(43) Date de publication de la demande: 24.01.2018
(73) Titulaire: SARTORIUS STEDIM FMT SAS, 13400 Aubagne (FR)
(72) Inventeur: THENARD, Laurent, 83640 Plan d'Aups Sainte Baume (FR); HOGREVE, Marc, 37139 Adelebsen (DE); MENIER, Marie-Christine, 13600 La Ciotat (FR)
(74) Mandataire: Derambure Conseil
(86) Numéro de dépôt international: PCT/FR2016/050591
(87) Numéro de publication internationale: WO 2016/146950

(56) Documents cités:
- EP-A1- 2 662 307
- EP-B1- 2 238 425
- US-A1- 2014 083 170
- US-A1- 2014 165 707
- US-B2- 8 910 509

## Description

L'invention concerne une poche multi-enveloppes souple destinée à recevoir un fluide biopharmaceutique et des systèmes et procédés de détection d'une éventuelle perte d'intégrité d'une telle poche.

On entend par « fluide biopharmaceutique », un produit issu de la biotechnologie (milieux de cultures, cultures cellulaires, solutions tampon, liquides de nutrition artificielle, produits sanguins et dérivés de produits sanguins) ou un produit pharmaceutique ou plus généralement un produit destiné à être utilisé dans le domaine médical. Un tel produit est sous forme liquide, pâteuse, ou éventuellement poudreuse. L'invention s'applique également à des produits autres mais soumis à des exigences analogues en ce qui concerne leur conditionnement. De tels produits sont de haute valeur ajoutée et il importe que l'on s'assure de leur intégrité, notamment de l'absence de toute contamination.

Aux fins de stockage et de transport, il est usuel de placer de tels fluides biopharmaceutiques dans des poches comportant une paroi en matière plastique, souple, fermée et stérile. Il est essentiel que de telles poches, lorsqu'elles reçoivent le fluide biopharmaceutique avant utilisation ou pendant utilisation du fluide biopharmaceutique, soient étanches, du moins présentent un degré d'étanchéité satisfaisant, de sorte que leur contenu éventuel soit préservé d'une possible quelconque détérioration d'origine extérieure à la poche, telle qu'une contamination. Il est donc nécessaire de pouvoir facilement détecter toute éventuelle perte d'intégrité de la poche avant, pendant ou après son utilisation.

On connait actuellement diverses méthodes de contrôle d'intégrité d'une poche adaptée pour contenir un fluide biopharmaceutique. Une première méthode connue consiste en un test physique permettant de déterminer si la paroi de la poche comporte une fuite ou un trou. Ainsi, le document EP 2 238 425 décrit une méthode dans laquelle une poche vide et stérile est mise en pression entre deux plaques de limitation d'expansion. Un matériau poreux est disposé entre la paroi de la poche et chaque plaque afin d'éviter qu'une éventuelle fuite de la paroi ne soit occultée lorsque la paroi est en contact avec les plaques de limitation d'expansion. On gonfle la poche et on étudie ensuite la variation de la pression appliquée aux deux plaques en fonction de la pression à laquelle est soumis l'intérieur de la poche. En cas de fuite de la poche, la pression appliquée aux plaques du dispositif de test chute au cours du temps par rapport à un seuil déterminé, ce qui permet d'en déduire une perte d'intégrité.

Le document US 2014/0165707 décrit un autre procédé pour tester l'intégrité d'une poche. La poche est disposée dans un compartiment et une couche perméable de réception structurée est disposée entre la poche et le compartiment. La poche est ensuite reliée à une source de fluide de remplissage de sorte à générer une pression positive prédéterminée à l'intérieur de celle-ci. On étudie ensuite la variation de la pression dans la poche pour déterminer si elle est étanche et donc intègre. De façon similaire, on connait également les documents US 8910509 ou le document US 2014/0083170 qui décrit un dispositif portable pour effectuer un contrôle d'intégrité d'une poche dans lequel la poche est remplie d'air, de préférence stérile, avant de mesurer la pression dans celle-ci pour détecter une éventuelle perte d'intégrité.

Enfin, on connait également d'autres méthodes de contrôle d'intégrité utilisant un gaz traceur inerte. Par exemple, la méthode dite « Helium Integrity Testing » (HIT®) consiste à placer en totalité une poche dans un réceptacle puis de faire le vide dans le réceptacle une fois fermé tout autour de la poche. Une quantité précise d'hélium est ensuite introduite dans la poche. En cas de fuite de la poche, un spectromètre de masse permet de détecter la présence d'hélium hors de la poche dans le réceptacle.

Ces méthodes de test physique, quand elles sont mise en oeuvre après utilisation de la poche, peuvent ne pas permettre de détecter des trous dans la paroi de la poche si ceux-ci sont inférieurs à deux micromètres, car ils peuvent dans ce cas être obstrués par des gouttes résiduelles du produit biopharmaceutique. En outre, la détection d'une fuite due à un trou inférieur à 2 micromètres s'avère difficile à détecter car cette fuite est souvent trop faible pour être dissociée du bruit de fond de fuite inhérent à la poche. Or, il est connu qu'un micro-organisme peut passer par un trou inférieur à cette taille, notamment un trou ayant une taille allant jusqu'à 0,2 micromètres. Il en résulte que l'utilisation des méthodes de test physique décrites ci-dessus ne permet pas de garantir l'absence d'invasion microbienne à l'intérieur de la poche.

Par ailleurs, de telles méthodes nécessitent d'introduire un gaz ou un fluide dans la poche lors du contrôle d'intégrité. Ces méthodes ne peuvent donc pas être mise en oeuvre lorsque la poche est emplie de fluide biopharmaceutique. Ces méthodes sont donc nécessairement mises en oeuvre avant (c'est-à-dire avant emplissage de la poche) ou après utilisation de la poche (c'est-à-dire après vidange préalable du fluide biopharmaceutique).

Lorsque ces méthodes sont mises en oeuvre avant utilisation de la poche mais après leurs stérilisation, l'introduction de gaz ou de fluide dans la poche risque de mettre en défaut la stérilité de la poche lors du contrôle d'intégrité lui-même. En particulier, le risque de contamination de la poche du fait du contrôle d'intégrité lui-même est souvent jugé comme étant supérieur au risque de présence de trou dans la paroi de la poche. Du fait de ce risque, ces méthodes sont souvent évitées. Lorsqu'elles sont mises en oeuvres, ces méthodes nécessitent l'utilisation d'un port stérile pour connecter la poche au système de mise en pression, qui outre ce risque de perte de stérilité que cela induit, est souvent long et complexe à mettre en oeuvre.

Par ailleurs, lorsque ces méthodes sont mises en oeuvre après utilisation de la poche, le fluide biopharmaceutique restant dans la poche, par exemple des gouttes restantes, risque d'obstruer les trous de la paroi de la poche, en particulier si ceux-ci sont de faibles dimensions, et par conséquent de fausser les résultats du contrôle d'intégrité. Par ailleurs, de telles méthodes physiques s'avèrent inefficaces pour détecter des micro-fuites de la poche, par exemple des trous de taille inférieure à deux micromètres. Par ailleurs, il est préjudiciable de ne détecter la possible contamination du fluide biopharmaceutique de la poche qu'après avoir utilisé ce fluide. Dans ce cas, l'utilisation du fluide peut avoir été impropre, ce qu'il est utile de savoir, mais peut toutefois être préjudiciable.

On connait également un autre type de méthode permettant de vérifier l'intégrité d'une poche adaptée pour comprendre du fluide biopharmaceutique avant ou après son utilisation. Ce type de méthode consiste en un test bactériologique dit « Bacterial Challenge Test » (BCT) dans laquelle la poche est préalablement remplie d'un milieu de culture. La poche une fois fermée est ensuite immergée dans un bain comprenant un milieu bactériologique. Après être retiré du bain, le milieu de culture de la poche est mis en culture afin d'étudier si des bactéries sont présentes, ce qui implique une rupture d'étanchéité de la paroi de la poche et un passage des bactéries à l'intérieur de la poche.

Toutefois, l'inconvénient de cet autre type de méthode est qu'elle est longue à mettre en oeuvre En outre, cette méthode est dans la pratique uniquement mise en oeuvre après utilisation de la poche. En effet, une telle méthode ne peut pas être mise en oeuvre lorsque la poche est emplie de fluide biopharmaceutique, par exemple en cours d'utilisation de la poche, et le risque de mettre en défaut la stérilité de la poche est bien trop élevé pour la mettre en oeuvre avant utilisation de la poche. En outre, les conditions de mises en oeuvre de cette méthode ne sont pas constantes ou maîtrisées de façon certaine. Cette méthode se révèle ainsi souvent imprécise car difficilement répétable dans des conditions identiques.

On connait également des dispositifs permettant de vérifier l'intégrité d'une poche sans nécessité la mise en oeuvre d'un contrôle d'intégrité. Le document EP 2 662 307 décrit par exemple un dispositif comprenant une première enveloppe intérieure délimitant un premier espace et formant *stricto sensu* une poche destinée à recevoir un fluide biopharmaceutique. Une deuxième enveloppe extérieure délimite un deuxième espace dans lequel se trouve la première enveloppe. Un gaz traceur se trouve dans le premier espace ou dans le deuxième espace à une pression différente de celle de deuxième espace ou du premier espace, respectivement. Une couche de détection colorimétrique est située dans l'autre espace que le gaz traceur et est responsive à la concentration de gaz traceur qui l'atteint en passant d'une première couleur à une deuxième couleur. Ainsi en cas de fuite de la première enveloppe, la couche colorimétrique change de couleur ce qui permet de détecter une rupture d' étanchéité de la poche à tout moment souhaité après sa fabrication et en tout état de cause juste avant son utilisation.

Toutefois, une telle poche ne permet pas de vérifier l'intégrité de la deuxième enveloppe de la poche, qui ne sert qu'à contenir le gaz traceur et non à protéger le fluide biopharmaceutique. Aussi, la présence du gaz traceur et du détecteur colorimétrique est inefficace pour déterminer si la deuxième enveloppe a conservé son étanchéité. En outre, avant son utilisation, la première enveloppe qui constitue la poche *stricto sensu* doit être extraite de la deuxième enveloppe. Ce dispositif permet donc de vérifier uniquement l'intégrité de la première enveloppe avant utilisation du fluide biopharmaceutique, et non pas pendant ou après son utilisation.

Par conséquent, il existe, dans le domaine spécifique de l'invention, le besoin de pouvoir protéger efficacement un fluide biopharmaceutique dans une poche. Il existe également le besoin de pouvoir tester l'intégrité d'une telle poche avant, pendant ou après son utilisation, cela de façon simple et avec le même niveau de fiabilité, voire avec un niveau de fiabilité supérieur, que les méthodes connues ou utilisées actuellement.

A cet effet, selon un premier aspect, l'invention concerne une poche pour fluide biopharmaceutique, comprenant :
- une première enveloppe, souple, fermée, étanche, en matière plastique, comportant une paroi délimitant une première enceinte intérieure destinée à recevoir le fluide biopharmaceutique, la première enveloppe étant pourvue d'au moins un orifice pour l'emplissage et/ou la vidange du fluide biopharmaceutique et d'au moins un tube d'emplissage et/ou de vidange associé de façon étanche à l'orifice d'emplissage et/ou de vidange, le tube d'emplissage et/ou de vidange ayant une entrée d'emplissage et/ou de vidange de la première enceinte du fluide biopharmaceutique,
- une deuxième enveloppe, souple, fermée, étanche, en matière plastique, comportant une paroi délimitant une deuxième enceinte intérieure dans laquelle se trouve la première enveloppe, la deuxième enceinte intérieure délimitant un espace intermédiaire entre la paroi de la première enveloppe et la paroi de la deuxième enveloppe, et
- un élément intercalaire interposé entre la première enveloppe et la deuxième enveloppe dans l'espace intermédiaire apte à éviter qu'un éventuel trou sur la paroi de la première enveloppe ou sur la paroi de la deuxième enveloppe soit occulté,
la première enveloppe, la deuxième enveloppe et l'élément intercalaire formant un tout cohérent, notamment lors de l'utilisation de la poche, et en ce que le tube d'emplissage et/ou de vidange traverse la deuxième enveloppe par une liaison étanche, l'entrée d'emplissage et/ou de vidange étant située à l'extérieur de la deuxième enveloppe.

Ainsi, on obtient une poche comportant une double enveloppe, c'est à dire une première enveloppe et une deuxième enveloppe qui permettent d'améliorer la fiabilité des contrôles d'intégrité existants avant, pendant ou après utilisation de la poche, tout en augmentant la protection structurelle intrinsèque du fluide biopharmaceutique. L'intégrité d'une telle poche peut en particulier être testée avant son utilisation sans risquer de contaminer la poche. Une telle poche peut également être testées lorsque celle-ci est déjà remplie de fluide biopharmaceutique ou après sa vidange sans réduire la précision du test effectué, Enfin, du fait de sa double enveloppe, une telle poche empêche la progression d'un micro-organisme de l'extérieur vers l'intérieur de la poche dans le cas de trous inférieurs à la taille minimale détectable par les méthodes de test physique décrite ci-dessus.

Dans divers modes de réalisation selon la présente invention, on peut éventuellement avoir recours en outre à l'une et/ou à l'autre des dispositions suivantes, prises séparément ou en combinaison, selon lesquelles :
- l'élément intercalaire est poreux et recouvre intégralement la paroi de la première enveloppe ;
- l'élément intercalaire est poreux et comprend une ouverture débouchant sur la paroi de la première enveloppe ;
- la première enveloppe est de type 2D ou dans laquelle la première enveloppe est de type 3D comportant deux soufflets ;
- l'élément intercalaire comprend au moins une couche poreuse en tissu, en non tissé, en PE, en PP, en PTFE ;
- l'élément intercalaire est responsif, notamment sensible, au fluide biopharmaceutique qui l'atteint, un élément de détection étant adapté pour détecter une interaction entre l'élément intercalaire et le fluide biopharmaceutique ;
- l'élément intercalaire est neutre, notamment non toxique, vis-à-vis du produit biopharmaceutique ;
- la paroi de la deuxième enveloppe comprend un port apte à être obturé ou connecté de façon étanche et amovible à une source de gaz ou de fluide ;
- la poche comprend une troisième enveloppe, souple fermée, étanche, en matière plastique, comportant une paroi délimitant une troisième enceinte intérieure dans laquelle se trouve la deuxième enveloppe, la troisième enveloppe délimitant un espace intermédiaire supplémentaire entre la paroi de la deuxième enveloppe et la paroi de la troisième enveloppe, la poche comprenant également un élément intercalaire interposé entre la deuxième enveloppe et la troisième enveloppe apte à éviter qu'un éventuel trou soit occulté sur la paroi de la deuxième enveloppe ou sur la paroi de la troisième enveloppe ;
- la première enveloppe, la deuxième enveloppe, la troisième enveloppe et les éléments intercalaires forment un tout cohérent, notamment lors de l'utilisation de la poche ;
- le tube d'emplissage et/ou de vidange traverse la troisième enveloppe par une liaison étanche, l'entrée d'emplissage et/ou de vidange étant située à l'extérieur de la troisième enveloppe ;
- l'espace intermédiaire est empli par un gaz traceur à une pression plus grande que la pression présente dans l'espace intermédiaire supplémentaire et dans la première enceinte intérieure ; et
- le gaz traceur est choisi dans le groupe comprenant le gaz carbonique, l'hélium, l'hexafluorure de soufre (SF6), l'azote ou un de leurs mélanges.

L'invention concerne également un système pour le contrôle d'intégrité d'une poche selon l'invention, comprenant :
- une poche selon l'invention,
- une source de gaz sous pression destiné à être introduit dans l'espace intermédiaire de la poche,
- un élément de mesure de la pression du gaz dans l'espace intermédiaire permettant la comparaison de la chute de pression dans l'espace intermédiaire une fois gonflée par rapport un seuil prédéfini de chute de pression, et
- deux plaques fixes de limitation d'expansion, écartées et en regard l'une de l'autre, aptes à ne pas occulter une éventuelle fuite dans la paroi de la deuxième enveloppe placée contre elles.

Dans divers modes de réalisation selon la présente invention, on peut éventuellement avoir recours en outre à l'une et/ou à l'autre des dispositions suivantes, prises séparément ou en combinaison, selon lesquelles :
- les plaques de limitation d'expansion sont respectivement recouvertes de garnitures présentant une porosité au gaz ; et
- les garnitures sont dans le même matériau que l'élément intercalaire.

L'invention concerne également un procédé de contrôle d'intégrité d'une poche afin de détecter l'existence de trous, dans lequel :
- dans une phase de préparation :
   ∘ on dispose d'un système pour le contrôle d'intégrités selon l'invention,
   ∘ on place la poche entre les deux plaques de limitation d'expansion,
   ∘ on connecte l'au moins un port de la deuxième enveloppe avec la source de gaz et l'élément de mesure de pression, de manière à pouvoir envoyer le gaz sous pression dans l'espace intermédiaire,
- dans une phase de test :
   ∘ on envoie le gaz sous pression dans l'espace intermédiaire, l'expansion de la poche étant limitée lorsque la paroi de la deuxième enveloppe vient contre les plaques de limitation d'expansion,
   ∘ puis, dans une étape ultérieure, on compare la chute de pression dans l'espace intermédiaire grâce à l'élément de mesure de pression par rapport au seuil prédéfini de manière que si la chute de pression dans l'espace intermédiaire est inférieure au seuil, on considère que la deuxième enveloppe a satisfait le contrôle d'intégrité tandis que si la chute de pression dans l'espace intermédiaire est supérieure au seuil, on considère que la deuxième enveloppe n'a pas satisfait le contrôle d'intégrité.

L'invention concerne également un système pour le contrôle d'intégrité d'une poche selon l'invention comprenant un élément de détection de gaz.

Dans divers modes de réalisation selon la présente invention, on peut éventuellement avoir recours en outre à l'une et/ou à l'autre des dispositions suivantes, prises séparément ou en combinaison, selon lesquelles :
- le système comprend :
   ∘ une poche selon l'invention,
   ∘ une source de gaz sous pression destiné à être introduit dans l'espace intermédiaire,
   ∘ un élément de contrôle et de commande de pression du gaz ; et
- Le système comprend en outre un réceptacle extérieur apte et destiné à recevoir la poche dans son entièreté.

L'invention concerne également un procédé de contrôle d'intégrité d'une poche afin de détecter l'existence de trous, dans lequel :
- dans une phase de préparation :
   ∘ on dispose d'un système pour le contrôle d'intégrité selon l'invention,
- dans une phase de test :
   ∘ on détecte la présence de gaz à l'extérieur de la deuxième enveloppe grâce à l'élément de détection de gaz de manière que si on ne détecte pas le gaz, on considère que la deuxième enveloppe a satisfait le contrôle d'intégrité tandis que si on détecte le gaz, on considère que la deuxième enveloppe n'a pas satisfait le contrôle d'intégrité.

Dans divers modes de réalisation selon la présente invention, on peut éventuellement avoir recours en outre à l'une et/ou à l'autre des dispositions suivantes, prises séparément ou en combinaison, selon lesquelles :
- dans la phase de préparation, on dispose d'un système selon l'invention et on connecte l'au moins un port de la deuxième enveloppe avec la source de gaz et l'élément de contrôle et de commande de pression du gaz, de manière à pouvoir envoyer le gaz sous pression dans l'espace intermédiaire dans la phase de test avant de détecter la présence de gaz à l'extérieur de la deuxième enveloppe ;
- dans la phase de préparation on dispose d'une poche selon l'invention et on connecte l'au moins un port supplémentaire de la troisième enveloppe avec l'élément de détection de gaz; et
- dans la phase de préparation, on dispose d'un système selon l'invention et on connecte l'élément de détection de gaz avec un port du réceptacle extérieur de manière que dans la phase de test, on détecte le gaz à l'intérieur du réceptacle extérieur.

L'invention concerne également un procédé de contrôle d'intégrité d'une poche afin de détecter un éventuel trou, dans lequel :
- on dispose d'une poche selon l'invention dans laquelle on remplit la première enceinte intérieure avec un milieu de culture adapté pour permettre la croissance de bactéries,
- on ferme la poche,
- on applique sur l'extérieur de la poche un milieu bactériologique,
- on met en culture le milieu de culture remplissant la première enceinte et on détecte la présence de bactéries dans le milieu de culture, de manière que si on ne détecte pas de bactéries, on considère que la première enveloppe et/ou la deuxième enveloppe a satisfait le contrôle d'intégrité tandis que si on détecte des bactéries, on considère que la première enveloppe et la deuxième enveloppe n'ont pas satisfait le contrôle d'intégrité.

Selon un mode de réalisation, on applique le milieu bactériologique sur la poche en pulvérisant le milieu bactériologique sur la poche ou en immergeant la poche dans le milieu bactériologique.

On décrit maintenant brièvement les figures des dessins.
La figure 1 est une vue en élévation d'une poche de réception et de protection d'un fluide biopharmaceutique selon l'invention, montrant la première enveloppe, l'élément intercalaire, la deuxième enveloppe, le tube d'emplissage et le tube de vidange. La première enveloppe, l'élément intercalaire et la deuxième enveloppe forment un tout cohérent lors de l'utilisation de la poche.
La figure 2A est une vue en coupe de la poche représentée selon le plan II-II de la figure 1 dans laquelle l'élément intercalaire recouvre intégralement la première enveloppe.
La figure 2B est une vue en coupe de la poche représentée selon le plan II-II de la figure 1 dans laquelle, la poche est disposée sur un support et dans laquelle l'élément intercalaire recouvre partiellement la première enveloppe.
Les figures 3A, 3B et 3C sont trois vues en coupe transversale, partielles, à plus grande échelle, illustrant trois réalisations possibles de la poche, dans lesquelles l'élément intercalaire est situé vers la face intérieure de la paroi de la deuxième enveloppe dont elle fait partie intégrante (figure 3A), situé entre les parois de la première enveloppe et de la deuxième enveloppe (figure 3C), associé à la paroi de la première enveloppe vers sa face extérieure (figure 3B).
La figure 4 est une vue schématique d'une première réalisation d'un système pour le contrôle d'intégrité d'une poche, la poche étant disposée dans un réceptacle extérieur, le système comprenant une source de gaz sous pression destiné à être introduit dans l'espace intermédiaire de la poche, un élément de contrôle et de commande du gaz dans l'espace intermédiaire de la poche et un élément de détection de gaz dans le réceptacle.
La figure 5 est une vue schématique d'une deuxième réalisation d'un système à deux plaques fixes de limitation d'expansion pour le contrôle d'intégrité d'une poche, dans lequel a été disposée la poche à contrôler.
La figure 6 est une vue schématique d'une troisième réalisation d'un système pour le contrôle d'intégrité d'une poche comprenant une troisième enveloppe, le système comprenant une source de gaz sous pression destiné à être introduit dans la deuxième enveloppe, un élément de mesure de la pression du gaz dans l'espace intermédiaire de la poche et un élément de détection de gaz relié à la troisième enveloppe.
La figure 7 est une vue schématique d'une quatrième réalisation d'un système pour le contrôle d'intégrité d'une poche comprenant une troisième enveloppe, un gaz traceur emplissant l'espace intermédiaire de la poche et un élément de détection de gaz étant reliés à la troisième enveloppe.
La figure 8 est une vue schématique d'une cinquième réalisation pour le contrôle d'intégrité d'une poche selon l'invention, la première enveloppe comprenant un milieu de culture et la poche étant immergée dans un milieu bactériologique.

Ci-après un exposé détaillé de plusieurs modes de réalisation de l'invention assorti d'exemples et de référence aux dessins.

L'invention a pour objet une poche 1 en vue de recevoir et protéger un fluide biopharmaceutique 2 ainsi que des systèmes de contrôle d'intégrité de la poche 1 afin de détecter l'existence de fuites ou de trous, et des procédés associés.

La poche 1 comprend au moins une première enveloppe 3 et une deuxième enveloppe 4.

La première enveloppe 3 est formée à partir d'une paroi 5 en matière plastique. Comme sa paroi 5, la première enveloppe 3 est souple et étanche. On entend ici par « étanche », le fait que la paroi 5 de la première enveloppe 3 ne permet pas de passage de fluide biopharmaceutique 2, de gaz, notamment de gaz de gonflage comme cela sera décrit par la suite, ou de possibles contaminants. La première enveloppe 3 et la paroi 5 forment et délimitent une première enceinte intérieure 6 fermée, pouvant être à plat ou déployée en volume et qui est apte et destinée à recevoir du fluide biopharmaceutique 2. Ainsi, la première enveloppe 3 se trouve typiquement soit dans un état plié à plat, par exemple pour le stockage, le transport, la manipulation soit dans un état déplié déployé pour recevoir et protéger le fluide biopharmaceutique 2, soit encore dans un état intermédiaire. La première enveloppe 3 peut être déformée pour passer de l'un à l'autre de ces états.

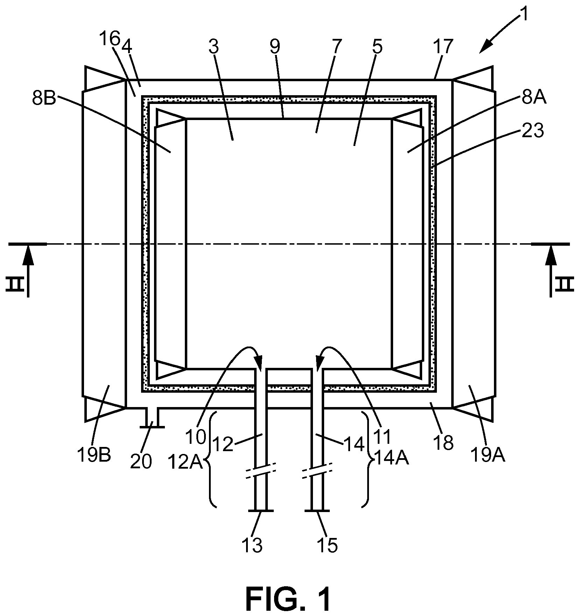

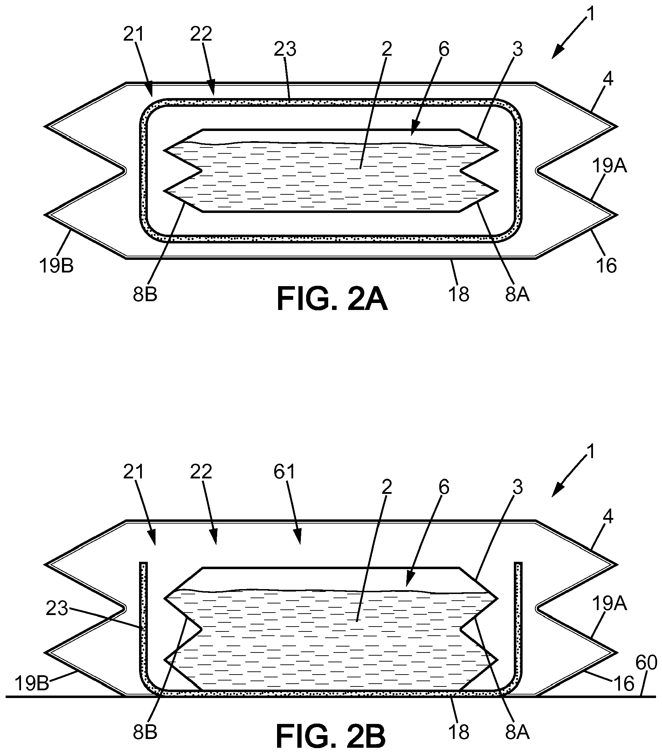

La première enveloppe 3 peut notamment être de type 2D, dans lequel deux parois sont directement réunies l'une à l'autre. La première enveloppe 3 peut également être de type 3D, c'est-à-dire en 3 dimensions, comme représentée sur les figures 1, 2A et 2B. La première enveloppe 3 comporte alors typiquement une paroi principale 7 en deux parties reliées de façon fixe et étanche à deux soufflets latéraux 8A, 8B par des soudures étanches 9.

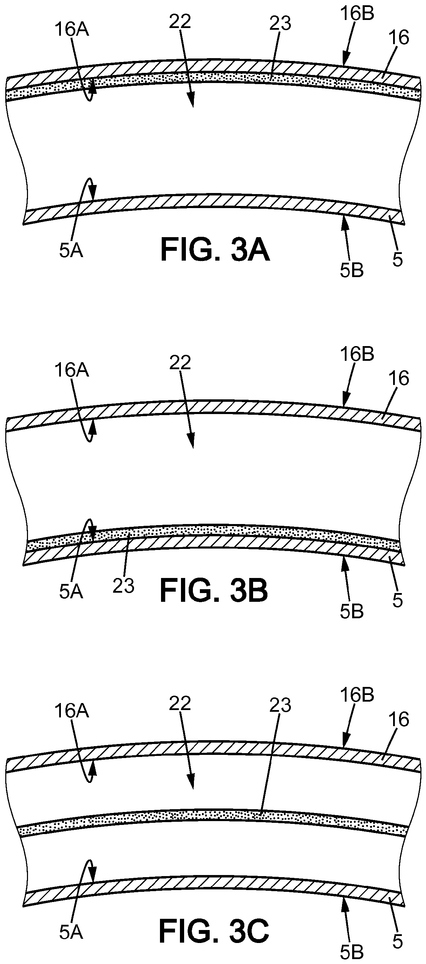

La première enveloppe 3, à savoir sa paroi 5, comporte une face extérieure 5A et une face intérieure 5B illustrées sur les figures 3A-3C. Les termes « extérieure » et « intérieure » se comprennent ici en relation avec ce qui est localisé, respectivement, hors de et dans la première enveloppe 3. La première enveloppe 3 délimite à l'intérieur d'elle-même la première enceinte intérieure 6, dont la limite est la face intérieure 5B et dont le volume est approprié pour être apte à recevoir le fluide biopharmaceutique 2 lorsqu'il est souhaité qu'il soit dans la première enveloppe 3.

La paroi 5 de la première enveloppe 3 est pourvue d'un orifice 10, c'est-à-dire d'un passage, d'emplissage avec le fluide biopharmaceutique 2 et d'un orifice 11, c'est-à-dire d'un passage, de vidange du fluide biopharmaceutique 2. A l'orifice d'emplissage 10 et à l'orifice de vidange 11 de la première enveloppe 3 et de la paroi 5, sont associés par des liaisons étanches, respectivement un tube d'emplissage 12 ayant à l'opposé une entrée d'emplissage 13 de la première enceinte intérieure 6 avec le fluide biopharmaceutique 2 et un tube de vidange 14 ayant à l'opposé une sortie de vidange 15 de la première enceinte intérieure 6 du fluide biopharmaceutique 2. L'entrée d'emplissage 13 et la sortie de vidange 15 peuvent respectivement être sélectivement amenées à l'état fermé ou ouvert, par exemple par des dispositifs d'ouverture/fermeture (non représentés).

En variante, la première enveloppe 3 peut comprendre un unique orifice d'emplissage et de vidange. Selon cette variante, un unique tube faisant office de tube d'emplissage et de tube de vidange de la première enceinte intérieure 6 de fluide biopharmaceutique 2 est alors associé par une liaison étanche à l'orifice de la première enveloppe 3. Selon encore une autre variante, la première enveloppe 3 peut comprendre plus de deux orifices d'emplissage et de vidange, et donc plus de deux tubes d'emplissage et/ou de vidange.

Par « liaison étanche», on entend une structure telle que la paroi 5 de la première enveloppe 3 et le tube 12, 14 en communication fluidique avec l'orifice 10, 11 sont associés entre eux de sorte, à la fois, à ne pas permettre un passage entre eux, notamment pour le fluide biopharmaceutique 2 ou un gaz ou de possibles contaminants et à former un tout solidaire indissociable.

Par « tube », on entend une structure creuse de longueur plus ou moins longue ou courte, le terme incluant également un simple port.

La deuxième enveloppe 4 est extérieure à la première enveloppe 3, la première enveloppe 3 étant intérieure et destinée à être placée dans la deuxième enveloppe 4. Ainsi, la première enveloppe 3 (et donc la première enceinte intérieure 6) est placée en totalité dans, c'est-à-dire à l'intérieur de la deuxième enveloppe 4, ou symétriquement, la deuxième enveloppe 4 est placé de sorte à entourer à l'extérieur la première enveloppe 3 (et donc la première enceinte intérieure 6).

Par suite, la deuxième enveloppe 4 est plus grande que la première enveloppe 3 ou symétriquement la première enveloppe 3 est plus petite que la deuxième enveloppe 4. Cela est vrai que la première enveloppe 3 soit vide de fluide biopharmaceutique 2 ou emplie de fluide biopharmaceutique 2.

La deuxième enveloppe 4 comporte une paroi 16 ayant le plus souvent plusieurs parties soudées entre elles le long de soudures étanches 17. La deuxième enveloppe 4 est fermée et étanche. La deuxième enveloppe 4 permet ainsi d'augmenter structurellement la protection du fluide biopharmaceutique 2 contre toute contamination depuis l'extérieur en augmentant la fiabilité de la poche 1.

En particulier, la paroi 16 est réalisée en matière plastique, non poreuse de sorte que la deuxième enveloppe 4 soit étanche dans son ensemble (le terme « étanche » devant être compris ici pour la deuxième enveloppe 4 de la même façon que pour la première enveloppe 3). En particulier, elle est souple, de sorte à pouvoir être à plat pour le stockage, le transport, la manipulation. La deuxième enveloppe 4 peut notamment être de type 2D, dans lequel deux parois sont directement réunies l'une à l'autre. La deuxième enveloppe 4 peut également être de type 3D, c'est-à-dire en 3 dimensions, comme représenté sur les figures 1, 2A et 2B. La deuxième enveloppe 4 comporte alors typiquement une paroi principale 18 en deux parties reliées de façon fixe et étanche à deux soufflets latéraux 19A, 19B par les soudures étanches 17.

La paroi 16 de la deuxième enveloppe 4 a de préférence une capacité d'expansion limitée. En particulier, dans le cas où la paroi 16 comprend une matière plastique, la paroi 16 peut également comprendre un film non-expansible, par exemple en aluminium, afin de limiter l'expansion de la paroi 16 de la deuxième enveloppe 4 lors de la mise en pression de la deuxième enceinte intérieure 21 comme cela sera décrit ci-après.

Le tube d'emplissage 12 et le tube de vidange 14 traversent la paroi 16 de la deuxième enveloppe 4 en s'étendant de part et d'autre de celle-ci. Les traversées de la deuxième enveloppe 4 par le tube d'emplissage 12 et le tube de vidange 13 sont réalisées par des liaisons étanches (cette expression devant être comprise comme exposé précédemment). Les liaisons étanches telles que celle précédemment mentionnées peuvent être réalisées par soudage ou analogue. Avec cette disposition, un tronçon 12A de tube d'emplissage 12 et un tronçon 14A de tube de vidange 14 sont respectivement situés à l'extérieur de la deuxième enveloppe 4. L'entrée d'emplissage 13 et la sortie de vidange 15 associées à la première enveloppe 3 sont donc également situées à l'extérieur de la deuxième enveloppe 4, de sorte à être accessibles.

La deuxième enveloppe 4, à savoir sa paroi 16, comporte une face intérieure 16A et une face extérieure 16B illustrées sur les figures 3A-3C. Les termes « intérieur » et « extérieur » se comprennent ici en relation avec ce qui est localisé, respectivement, dans et hors de la deuxième enveloppe 4. La deuxième enveloppe 4 délimite à l'intérieur d'elle-même une deuxième enceinte intérieure 21, dont la limite est la face intérieure 16A et dont le volume est approprié pour être apte à recevoir la première enveloppe 3, vide ou emplie du fluide biopharmaceutique 2.

Ainsi, la première enveloppe 3 est préalablement introduite dans la deuxième enveloppe 4. La deuxième enveloppe 4 est ensuite amenée à l'état fermé, notamment par des soudures étanches 17, une fois la première enveloppe 3 introduite dans la deuxième enceinte intérieure 21. En particulier, la deuxième enveloppe 4, une fois fermée, n'est plus destinée à être ouverte de nouveau pour extraire la première enveloppe 3 avant utilisation du fluide biopharmaceutique 2. En particulier, la poche 1 peut tout d'abord être réalisée en salle blanche en assemblant la première enveloppe 3 avec la deuxième enveloppe 4. La poche 1 peut ensuite être stérilisée par rayonnement ionisants.

A l'extérieur de la première enveloppe 3 mais à l'intérieur de la deuxième enveloppe 4 est formé un espace intermédiaire 22, situé dans la deuxième enceinte intérieure 21 hors de la première enveloppe 3. Les limites de l'espace intermédiaire 22 sont la face extérieure 5A de la paroi 5 de la première enveloppe 3 et la face intérieure 16A de la paroi 16 de la deuxième enveloppe 4. Sur la paroi 16, en particulier sur la paroi principale 18, il peut être prévu au moins un port 20 apte à être alternativement obturé ou connecté de façon étanche et amovible, par exemple à une source de gaz. En particulier, le port 20 peut être amené à l'état ouvert pour permettre l'introduction d'un gaz dans la deuxième enveloppe 4, et en particulier dans l'espace intermédiaire 22. Le port 20 peut également être amené à l'état fermé, notamment lors du stockage, du transport et de l'utilisation de la poche 1.

La poche 1 comprend également un élément intercalaire 23, logé dans l'espace intermédiaire 22, interposé entre la paroi 5 de la première enveloppe 3 et la paroi 16 de la deuxième enveloppe 4. Cet élément intercalaire 23 est apte à éviter qu'un éventuel trou T soit occulté sur la paroi 5 de la première enveloppe 3 ou sur la paroi 16 de la deuxième enveloppe 4. En effet, cela pourrait être le cas si les parois 5, 16 venaient à être en contact l'une avec l'autre.

L'élément intercalaire 23 est poreux et peut comprendre une ou plusieurs couches poreuses recouvrant intégralement la face extérieure 5A de la paroi 5 de la première enveloppe 3 et/ou la face intérieure 16A de la paroi 16 de la deuxième enveloppe 4. En particulier, l'élément intercalaire 23 s'étend sur toute la surface de la face extérieure 5A de la paroi 5 de la première enveloppe 3 et/ou de la face intérieure 16A de la paroi 16 de la deuxième enveloppe 4.

En variante, comme illustré sur la figure 2B, l'élément intercalaire 23 peut également comprendre une ouverture 61 débouchant sur la paroi 5 de la première enveloppe 3, de sorte à ne pas s'étendre sur toute la toute la surface de la face extérieure 5A de la paroi 5 de la première enveloppe 3 et/ou de la face intérieure 16A de la paroi 16 de la deuxième enveloppe 4. L'ouverture 61 est de taille macroscopique et peut consister en un trou dans l'élément intercalaire 23 de taille variable. L'élément intercalaire 23 peut notamment ne pas recouvrir une des faces de la paroi 5 de première enveloppe 3. Selon cette variante, lorsque la poche 1 est disposée sur un support 60 comme illustrée sur la figure 2B, seule la face de la paroi 5 de la poche 1 du côté du support 60 est alors recouverte avec l'élément intercalaire 23.

L'élément intercalaire 23 peut être directement en contact avec la face extérieure 5A de la paroi 5 de la première enveloppe 3 et/ou de la face intérieure 16A de la paroi 16 de la deuxième enveloppe 4.

L'élément intercalaire 23 est poreux par suite soit d'un agencement ménageant une porosité, soit de l'emploi d'un ou de plusieurs matériaux poreux. Par exemple, l'élément intercalaire 23 peut comprendre une ou plusieurs couches poreuses en tissu, en non tissé, en PE, en PP, en PTFE ou autre matériau analogue.

On entend ici par « porosité », le fait que l'élément intercalaire 23 comporte une multiplicité d'interstices adjacents les uns aux autres, traversant d'un coté à l'autre la ou les couches qui constituent l'élément intercalaire 23, de sorte que, d'une part, tout éventuel trou T sur la face extérieure 5A de la paroi 5 de la première enveloppe 3 se trouve nécessairement au regard de et en communication avec au moins un débouché d'interstice de l'élément intercalaire 23 et que, d'autre part, un gaz ou un fluide peut traverser l'élément intercalaire 23 de part en part.

L'agencement de l'élément intercalaire 23 par rapport à la première enveloppe 3 et à la deuxième enveloppe 4 peut avoir différentes réalisations. Le cas échéant, ces réalisations peuvent être combinées entre elles. Dans une première réalisation (figures 3A), l'élément intercalaire 23 recouvre structurellement la face intérieure 16A de la paroi 16 de la deuxième enveloppe 4. Dans une deuxième réalisation (figures 3C), l'élément intercalaire 23 est placé libre dans l'espace intermédiaire 22. Dans une troisième réalisation (figures 3B), l'élément intercalaire recouvre structurellement la face extérieure 5A de la paroi 5 de la première enveloppe 3. Dans toutes ces réalisations, l'élément intercalaire 23 peut être déformable, notamment afin de se conformer à la face extérieure 5A de la paroi 5 que la première enveloppe 3 soit vide de fluide biopharmaceutique 2, notamment à l'état plié, ou emplie de fluide biopharmaceutique 2, notamment à l'état déplié.

On entend ici par « recouvrir structurellement », le fait que l'élément intercalaire 23 s'étend au contact d'une face, y compris que l'élément intercalaire 23 fasse structurellement partie d'une paroi de façon indissociable ou quasi indissociable ou de manière analogue. Dans les réalisations dans lequel l'élément intercalaire recouvre structurellement la face intérieure 16A de la paroi 16 de la deuxième enveloppe 4 ou la face extérieure 5A de la paroi 5 de la première enveloppe 3 (figures 3A et 3C), l'élément intercalaire 23 peut être fixée à ces faces 16A, 5A par exemple par soudure, collage, ou par tout autre moyen.

Dans le cas où la première enveloppe 3 est une poche 3D, l'élément intercalaire 23 peut recouvrir intégralement et le cas échéant structurellement également, la face extérieure de l'intérieur de chacun des deux soufflets 8A, 8B de la première enveloppe 3. On entend par « intérieur d'un soufflet », la partie du soufflet attenante au pli rentrant. En effet, il serait possible, en l'absence d'élément intercalaire 23 que les deux faces extérieures des deux parties du soufflet attenantes au pli rentrant viennent l'une contre l'autre et qu'un éventuel trou T sur l'une des faces extérieures soit occulté par l'autre face extérieure. Grace à la présence de l'élément intercalaire 23 dans chaque soufflet 8A, 8B, toute occultation peut être empêchée.

Par ailleurs, comme illustrés par la figure 1, le tube d'emplissage 12 et le tube de vidange 14 traversent l'élément intercalaire 23 en s'étendant de part et d'autre de celui-ci, en particulier dans l'espace intermédiaire 22 et hors de la deuxième enveloppe 4.

L'élément intercalaire 23 est de préférence neutre, notamment non toxique, vis-à-vis du fluide biopharmaceutique 2, en particulier compris dans la première enceinte intérieure 6 de la première enveloppe 3. Par « neutre », on comprend que, dans le cas où l'élément intercalaire 23 vient en contact avec le fluide biopharmaceutique 2, l'élément intercalaire 23 n'entraine aucune réaction physique ou chimique entrainant la dégradation, la contamination ou la modification du fluide biopharmaceutique 2. Aussi, même après mise en contact avec l'élément intercalaire 23, le produit biopharmaceutique 2 reste toujours adapté pour son usage final, médical ou autre.

L'élément intercalaire 23 peut en outre être responsif, c'est-à-dire sensible, à la présence du fluide biopharmaceutique 2 qui l'atteint, un élément de détection étant adapté pour détecter une interaction entre l'élément intercalaire et le fluide biopharmaceutique. A titre d'exemple, l'élément intercalaire 23 peut passer d'une première couleur à une deuxième couleur différente de la première couleur. L'élément intercalaire 23 peut ainsi être localement coloré en une deuxième couleur spécifiquement à l'endroit où le fluide biopharmaceutique 2 est entré en contact avec l'élément intercalaire 23. A titre d'exemple, l'élément intercalaire 23 peut être un papier pH poreux qui réagit en changeant de couleur au contact du fluide biopharmaceutique 2. Cela permet ainsi de déterminer la localisation d'un éventuel trou en visualisant l'élément intercalaire 23. Notamment, en cas de contact avec le fluide biopharmaceutique 2, celui-ci s'écoulera, du fait de la porosité de l'élément intercalaire 23, depuis la face intérieure vers la face extérieure de l'élément intercalaire 23, au niveau de laquelle le changement de couleur peut être détecté par des moyens optiques (ou visuels), par exemple à travers la deuxième enveloppe 4 si celle-ci est transparente ou translucide.

L'élément intercalaire 23 peut être transparent afin, par exemple de visualiser le fluide biopharmaceutique 2 contenu dans la première enceinte intérieure 6 de la poche 1. En variante, l'élément intercalaire 23 peut également être opaque. Selon cette variante, l'ouverture 61 telle que représentée sur la figure 2B permet alors de visualiser le fluide biopharmaceutique 2 contenu dans la première enceinte intérieure 6.

Pour pouvoir recevoir et protéger efficacement le fluide biopharmaceutique 2, la première enceinte intérieure 6 de la première enveloppe 3 et son contenu éventuel doivent être préservés d'une possible quelconque détérioration d'origine extérieure à la poche 1, telle qu'une contamination. La première enveloppe 3 et/ou la deuxième enveloppe 4 sont donc conçues et fabriquées pour être étanches, mais, des défauts de fabrication ne peuvent être exclus et l'étanchéité peut être affectée après fabrication.

L'étanchéité est susceptible d'être affectée dès lors que la première enveloppe 3 et la deuxième enveloppe 4 comportent chacune un ou plusieurs passages ou trous T les traversant, y compris une porosité, ce ou ces passages ayant un ou plusieurs débouchés respectivement sur la face extérieure 5A de la paroi 5 de la première enveloppe 3 et sur la face extérieure 16B de la paroi 16 de la deuxième enveloppe 4, y compris les soudures 9, 17 entre les pièces constitutives des première et deuxième enveloppes 3, 4 en question. En particulier, de tels trous T entrainant la perte d'étanchéité de la première enveloppe 3 et/ou de la deuxième enveloppe 4 peuvent être de faibles tailles, comme des trous d'épingles, voire microscopiques. Par exemple, les trous T peuvent avoir une taille inférieure à 10 micromètres, voire inférieure à 2 micromètres.

Avant, pendant ou après l'utilisation d'une poche 1 selon l'invention, il est donc indispensable de pouvoir s'assurer que la première enveloppe 3 et/ou la deuxième enveloppe 4 présentent l'étanchéité requise et ne comportent donc pas de trous T susceptibles d'entrainer la contamination du fluide biopharmaceutique 2. Ainsi qualifiée d'«intègre », la poche 1 est apte à recevoir et protéger un fluide biopharmaceutique 2, alors qu'une poche 1 dans laquelle les première et deuxième enveloppes 3, 4 ne présentent pas cette étanchéité est dite non intègre et, étant inapte à recevoir et protéger un fluide biopharmaceutique 2, doit, dans le cadre du processus de mise en oeuvre des poches 1, être écartée et non pas utilisée.

En particulier, si seule l'étanchéité de la première enveloppe 3 est affectée, son contenu éventuel, et en particulier le produit biopharmaceutique 2, est préservé car celui-ci reste confiné par la deuxième enceinte intérieure 21. Si seule l'étanchéité de la deuxième enveloppe 4 est affectée, le contenu éventuel de la première enveloppe 3, et en particulier le produit biopharmaceutique 2, est préservé car celui-ci reste confiné dans la première enceinte intérieure 6. Toutefois, si l'étanchéité de la première enveloppe 3 et de la deuxième enveloppe 4 sont affectées ensemble, alors la poche 1 n'est plus intègre.

Aussi, avec la structure qui vient d'être décrite, la première enveloppe 3, la deuxième enveloppe 4 et l'élément intercalaire 23 forment un tout cohérent, notamment à usage unique, assurant l'intégrité du produit biopharmaceutique 2. En particulier, il n'est pas nécessaire avec une poche 1 selon l'invention d'extraire la première enveloppe 3 de la deuxième enveloppe 4 avant utilisation du fluide biopharmaceutique car l'entrée d'emplissage 13 et la sortie de vidange 15 associées à la première enveloppe 3 sont situées à l'extérieur de la deuxième enveloppe 4.

La poche 1 selon l'invention comprenant une première enveloppe 3 et une deuxième enveloppe 4 permet ainsi de renforcer la fiabilité de la poche 1 tout au long de son usage, et notamment avant ou lors de l'utilisation du fluide biopharmaceutique 2. Ceci est d'autant plus vrai que, même si chacune des première et deuxième enveloppes 3, 4 comprennent un trou T, il est statistiquement peu probable que ces trous T soient proches ou alignés de façon à laisser passer facilement un élément contaminant depuis l'extérieur vers l'intérieur de la première enveloppe 3 dans laquelle se trouve le fluide biopharmaceutique 2. A titre d'exemple, on estime que si la première enveloppe 3 et la seconde enveloppe 4 présentent chacune un trou T, notamment un trou inférieur à 2 micromètres et donc indétectable avec une méthode de test d'intégrité physique connue, la probabilité que les deux trous soient distants de moins de 10 millimètres sur une poche 1 de contenance égale à 5 litres est d'environ 10⁻⁷. Ainsi, il est statistiquement peu probable qu'un élément contaminant puisse se propager depuis l'extérieur jusque dans la première enceinte 6. Dans le cas où un microorganisme passe par un trou T de la seconde enveloppe 4, celui-ci ne pourra pas se multiplier dans l'espace intermédiaire 22 en l'absence d'élément nutritif puisque cet espace est un milieu stérile, pour ensuite se propager dans la première enveloppe 3.

Par ailleurs, grâce à une poche 1 selon l'invention, on peut utiliser les méthodes de contrôle d'intégrité, notamment physique, de façon simple et rapide. On décrit ci-après des réalisations de l'invention, dans lesquelles on détecte une éventuelle perte d'étanchéité de la deuxième enveloppe 4 d'une poche 1 telle que précédemment décrite.

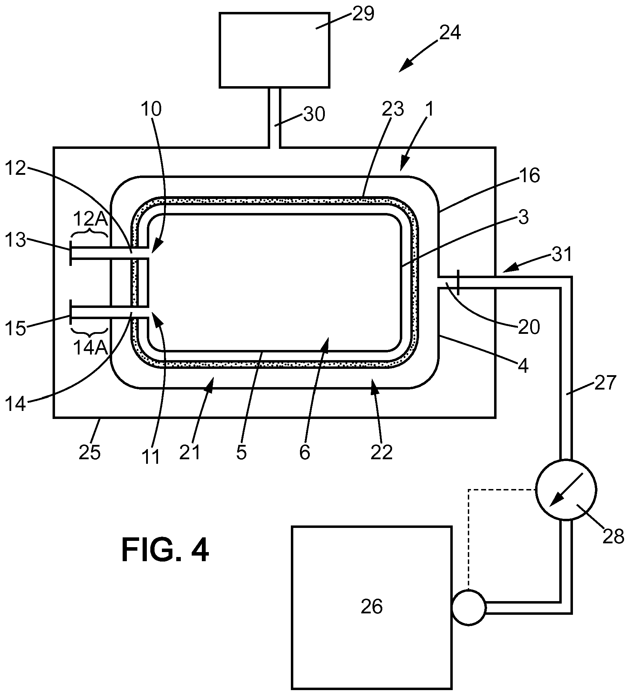

Dans une première réalisation qui peut être illustrée par la figure 4, un système 24 est utilisé pour détecter l'intégrité de la poche 1, et en particulier de la deuxième enveloppe 4.

Ce système 24 comprend un réceptacle extérieur 25 dans lequel peut être disposé la poche 1 selon l'invention. Le réceptacle extérieur 25 est apte et destiné à recevoir la poche 1 entièrement. Par suite, le réceptacle extérieur 25 est plus grand que la poche 1 ou symétriquement la poche 1 est plus petite que le réceptacle extérieur 25. En particulier, le système 24 peut comprendre une garniture poreuse au gaz à l'intérieur du réceptacle extérieur 25. La garniture, contre laquelle est disposée la poche 1, permet de ne pas bloquer une fuite éventuelle de la seconde enveloppe 4 lorsque la poche 1 est disposée dans le réceptacle extérieur 25.

Le réceptacle extérieur 25 peut notamment consister en une caisse ou une coquille rigide ou semi-rigide étanche. Plus particulièrement, selon une configuration, le réceptacle extérieur 25 a une forme parallèlipèdique. Le réceptacle extérieur 25 peut comprendre une ouverture pour introduire la poche 1 pouvant être sélectivement ouverte ou fermée. A cet effet, le réceptacle extérieur 25 peut comporter par exemple un couvercle amovible pourvu d'organes de préhension et de manipulation. Le cas échéant, il est prévu des éléments de verrouillage rapide du couvercle en position fermé, occultant l'ouverture.

Le système 24 comprend une source 26 de gaz sous pression et une ligne d'injection 27 de gaz sous pression, apte à être associé en communication fluidique ou associé en communication fluidique en sortie avec le port 20 de la deuxième enveloppe 4 de la poche 1. Le gaz est destiné à être introduit dans l'espace intermédiaire 22 de la poche 1, en particulier dans la deuxième enveloppe 4 via le port 20 et des éléments de connexion appropriés. Un tel gaz peut par exemple être un gaz inerte, et notamment un gaz neutre (ce terme devant être compris comme précédemment défini) vis-à-vis du fluide biopharmaceutique 2, ceci afin de ne pas contaminer le fluide biopharmaceutique 2 dans l'hypothèse où la première enveloppe 3 serait percée.

Le système 24 comprend également un élément 28 de contrôle et de commande. L'élément 28 de contrôle et de commande peut par exemple être un contrôleur de pression du gaz de gonflage sous pression dans la ligne d'injection 27, de sorte à commander l'injection de gaz lorsque cela est souhaité et de commander l'injection avec la pression souhaitée. Un tel élément 28 peut être un manomètre, une vanne réglable et/ou une ligne de commande entre eux.

Le système 24 comprend également un élément 29 de détection de gaz dans le réceptacle extérieur 25. L'élément 29 de détection de gaz est en particulier apte à être associé en communication fluidique ou associé en communication fluidique en sortie avec un port 30 du réceptacle extérieur 25. Un tel élément 29 peut par exemple être un spectromètre de masse, notamment si le vide est effectué dans le réceptacle extérieur 25 préalablement à la phase de test de la poche 1 par le système 24.

Le procédé de mise en oeuvre du système 24 de contrôle d'intégrité de la poche 1, qui vient d'être décrit, comporte une phase de préparation suivie d'une phase de test.

Dans la phase de préparation, on dispose d'une poche 1 telle que décrite et d'un système 24 tel que décrit. On place la poche 1 dans le réceptacle extérieur 25. La poche 1, et notamment la première enveloppe 3 peut notamment être emplie de fluide biopharmaceutique 2 ou vide de fluide biopharmaceutique 2. L'entrée d'emplissage 13 et la sortie de vidange 15 de la première enveloppe 3 sont alors à l'état fermé.

On connecte le port 20 de la deuxième enveloppe 4 avec la source 26 de gaz, ce qui est rendu possible du fait d'une ouverture étanche 31 par laquelle passe la ligne d'injection 27 dans le réceptacle extérieur 25. Puis, on ferme le réceptacle extérieur 25 et on effectue éventuellement le vide à l'intérieur de celui-ci. Grâce à cette connexion, il est ensuite possible de pouvoir envoyer le gaz sous pression dans l'espace intermédiaire 22 de la poche 1.

Dans la phase de test, on envoie le gaz sous pression depuis la source 26 jusque dans l'espace intermédiaire 22 de la poche 1. Il est en général nécessaire d'éviter une pression trop forte de gaz pour ne pas risquer une vidange de la première enceinte intérieure 6, si celle-ci est emplie de fluide biopharmaceutique 2, ou un risque de contraintes trop élevées sur la première enveloppe 3 et/ou sur la deuxième enveloppe 4. Puis, dans une étape ultérieure, on détecte la présence de gaz dans le réceptacle extérieur 25, et notamment à l'extérieur de la poche 1, grâce à l'élément 29 de détection de gaz.

On peut alors interpréter les résultats du contrôle d'intégrité. Si on ne détecte pas le gaz, on considère que la deuxième enveloppe 4 a satisfait le contrôle d'intégrité. Si, au contraire, on détecte le gaz, on considère que la deuxième enveloppe 4 n'a pas satisfait le contrôle d'intégrité.

En utilisant une poche 1 comprenant une première et une deuxième enveloppe 4, il n'est pas nécessaire qu'un port d'introduction de gaz soit ménagé directement sur la paroi 5 de la première enveloppe 3 contenant le fluide biopharmaceutique 2. Ainsi, en cas de perte de stérilité au niveau du port 20 lors de la mise en oeuvre du système 24 de contrôle d'intégrité tel que décrit, le fluide biopharmaceutique 2 reste protégé par la première enveloppe 3.

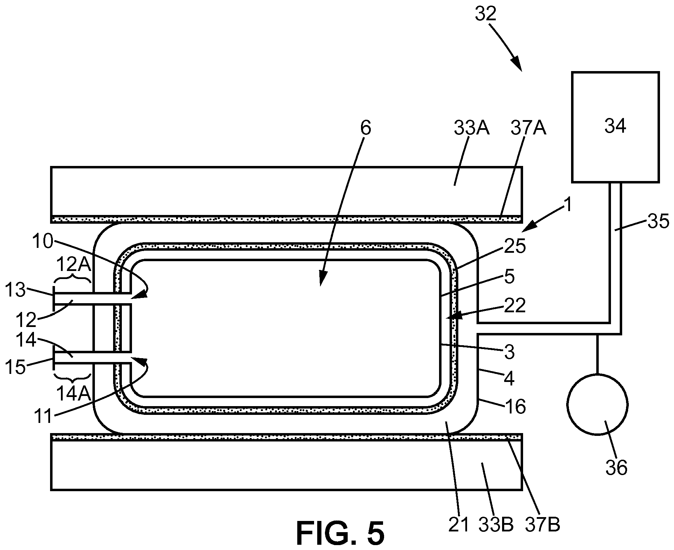

Dans une deuxième réalisation illustrée par la figure 5, on décrit un autre système 32 pour détecter l'intégrité de la poche 1, et en particulier de la deuxième enveloppe 4. Le système 32 peut notamment correspondre à celui décrit dans le document EP 2 238 425.

Le système 32 comprend une source 34 de gaz sous pression et une ligne d'injection 35 de gaz sous pression, apte à être associé en communication fluidique ou associé en communication fluidique en sortie avec le port 20 de la deuxième enveloppe 4 de la poche 1. Le gaz est destiné à être introduit dans l'espace intermédiaire 22 de la poche 1, en particulier dans la deuxième enveloppe 4 via le port 20 et des éléments de connexion appropriés.

Le système 32 comprend également un élément de mesure 36 de la pression du gaz dans la deuxième enveloppe 4 via le port 20 et les éléments de connexion. L'élément de mesure 36 permet la comparaison de la chute de pression dans l'espace intermédiaire 22 de la deuxième enveloppe 4 une fois gonflée, par rapport un seuil prédéfini, comme il sera expliqué par la suite. Un tel élément 36 peut être un manomètre par exemple.

Le système 32 comprend également deux plaques 33A, 33B rigides, fixes, de limitation d'expansion. Ces plaques 33A, 33B sont écartées et en regard l'une de l'autre, en l'espèce disposées sensiblement parallèlement l'une à l'autre. Les plaques 33A, 33B de limitation d'expansion ont pour caractéristique essentielle d'être aptes à ne pas occulter une éventuelle fuite ou trou T dans la paroi de la poche 1 placée contre elles, et notamment dans la paroi 16 de la deuxième enveloppe 4.

Les plaques 33A, 33B de limitation d'expansion peuvent être, en totalité ou seulement en partie destinées à être en contact avec la paroi 16 de la deuxième enveloppe 4 de la poche 1, et agencées pour laisser passer le gaz sous pression susceptible de provenir de l'espace intermédiaire 22 du fait de l'existence d'une fuite, c'est-à-dire d'un ou plusieurs trous T dans la paroi 16 de la deuxième enveloppe 4.

Dans ce but, les plaques 33A, 33B de limitation d'expansion sont respectivement recouvertes de garnitures 37A, 37B présentant une porosité au gaz. En particulier, de telles garnitures 37A, 37B peut notamment être constituées du même matériau que l'élément intercalaire 23. Il est entendu que les plaques 33A, 33B de limitation d'expansion doivent présenter une rigidité leur permettant de supporter la pression exercée par la poche 1, une fois celle-ci gonflée.

Le procédé de mise en oeuvre du dispositif de contrôle d'intégrité de la poche 1, qui vient d'être décrit, comporte une phase de préparation suivie d'une phase de test.

Dans la phase de préparation, on dispose d'une poche 1 telle que décrite et d'un système 32 tel que décrit. On place la poche 1 à plat entre les deux plaques 33A, 33B de limitation d'expansion. La poche 1, et notamment la première enveloppe 3 peut notamment être emplie de fluide biopharmaceutique 2 ou vide de fluide biopharmaceutique 2. L'entrée d'emplissage 13 et la sortie de vidange 15 de la première enveloppe 3 sont alors à l'état fermé.

On connecte le port 20 de la deuxième enveloppe 4 avec la source 34 de gaz et l'élément de mesure 36 de pression, ce qui est rendu possible via la ligne d'injection 35. Grâce à cette connexion, il sera ensuite possible de pouvoir envoyer le gaz sous pression dans l'espace intermédiaire 22 et de mesurer la pression du gaz.

Dans la phase de test, on envoie le gaz sous pression depuis la source 34 jusque dans l'espace intermédiaire 22 de la deuxième enveloppe 4. L'expansion de la deuxième enveloppe 4 est limitée, sa paroi 16 venant contre les plaques 33A, 33B de limitation d'expansion, plus précisément contre les garnitures 37A, 37B.

Il est généralement nécessaire d'attendre la fin d'une période de stabilisation avant que de procéder au test lui-même. Puis, dans une étape ultérieure, on compare la chute de pression dans l'espace intermédiaire 22 grâce à l'élément de mesure 36 de pression par rapport un seuil prédéfini de chute de pression. Ce seuil est par exemple la valeur de la chute de pression d'une poche 1 subissant le contrôle d'intégrité et que l'on considère comme intègre.

On peut alors interpréter les résultats du contrôle d'intégrité. Si la chute de pression dans la poche 1 est inférieure au seuil, on considère que la deuxième enveloppe 4 a satisfait le contrôle d'intégrité. Si, au contraire, la chute de pression dans la deuxième enveloppe 4 est supérieure au seuil, on considère que la deuxième enveloppe 4 n'a pas satisfait le contrôle d'intégrité.

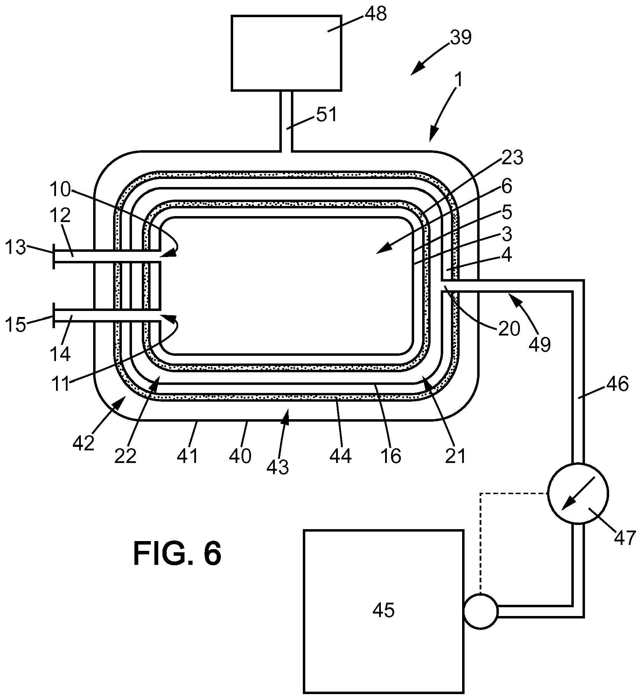

Dans une troisième réalisation illustrée par la figure 6, on décrit un autre système 39 pour détecter l'intégrité d'une poche 1 comportant également une troisième enveloppe 40.

La troisième enveloppe 40 comporte une paroi 41 souple et étanche. La troisième enveloppe 40 et sa paroi 41 forment et délimitent une troisième enceinte intérieure 42. Sur la paroi 41, il est prévu au moins un port 51 supplémentaire apte à être obturé ou connecté de façon étanche et amovible.

La troisième enveloppe 40 est extérieure à la première et à la deuxième enveloppes 3, 4, la deuxième enveloppe 4 étant placée dans la troisième enveloppe 40. Ainsi, la première enveloppe 3 (et donc la première enceinte intérieure 6) est placée en totalité dans, c'est-à-dire à l'intérieur de la deuxième enveloppe 4, ou symétriquement, la deuxième enveloppe 4 est placé de sorte à entourer à l'extérieur la première enveloppe 3 (et donc la première enceinte intérieure 6). La deuxième enveloppe 4 est également placée en totalité dans la troisième enveloppe 40.

A l'extérieur de la deuxième enveloppe 4 mais à l'intérieur de la troisième enveloppe 40 est formé un espace intermédiaire 43 supplémentaire situé hors de la deuxième enveloppe 4. La poche 1 comprend également un élément intercalaire 44 tel que précédemment défini, logé dans cet espace intermédiaire 43 supplémentaire, interposé entre la paroi 16 de la deuxième enveloppe 4 et la paroi 41 de la troisième enveloppe 40. Cet élément intercalaire 44 est apte à éviter qu'un éventuel trou T soit occulté sur la paroi 16 de la deuxième enveloppe 4 ou sur la paroi 41 de la troisième enveloppe 40.

En outre, l'élément intercalaire 44 a de préférence les mêmes propriétés que l'élément intercalaire 23 compris dans l'espace intermédiaire 22 tel que décrits ci-dessus. En particulier, l'élément intercalaire 44 peut comprendre une ou plusieurs couches poreuses recouvrant intégralement la face extérieure 16B de la paroi 16 de la deuxième enveloppe 4 et/ou la face intérieure de la paroi 41 de la troisième enveloppe 40 (le terme « porosité » devant être compris comme précédemment). L'élément intercalaire 44 peut être neutre vis-à-vis du fluide biopharmaceutique 2 (le terme « neutre » devant être compris comme précédemment). L'élément intercalaire 44 peut en outre être responsif, c'est-à-dire sensible, à la présence du fluide biopharmaceutique 2 qui l'atteint en passant d'une première couleur à une deuxième couleur différente de la première couleur.

L'utilisation de trois enveloppes 3, 4, 40 au sein d'une seule poche 1 permet de renforcer la protection du fluide biopharmaceutique 2. Ceci est d'autant plus vrai qu'il est statistiquement peu probable que chacune de ces trois enveloppes 3, 4, 40 comporte des trous T alignés de façon à laisser passer facilement un élément contaminant depuis l'extérieur vers l'intérieur de la première enveloppe 3 dans laquelle se trouve le fluide biopharmaceutique 2. La première enveloppe 3, la deuxième enveloppe 4, la troisième enveloppe 40 et les éléments intercalaires 23, 44 forment ainsi un tout cohérent, notamment lors de l'utilisation de la poche 1. En particulier, le tube d'emplissage 12 et le tube de vidange 14 traversent la troisième enveloppe 40 par des liaisons étanches, l'entrée d'emplissage 13 et la sortie de vidange 15 étant situées à l'extérieur de la troisième enveloppe 40 de sorte à être accessibles.

Comme dans la première réalisation décrite par la figure 4, le système 39 comprend une source 45 de gaz sous pression, une ligne d'injection 46 de gaz sous pression, un élément 47 de contrôle et de commande et un élément 48 de détection de gaz. Le gaz est destiné à être introduit dans l'espace intermédiaire 22 de la poche 1, en particulier dans la deuxième enveloppe 4 via le port 20 et des éléments de connexion appropriés. L'élément 48 de détection de gaz est en particulier apte à être associé en communication fluidique ou associé en communication fluidique en sortie avec le port 51 supplémentaire de la troisième enveloppe 40 de la poche 1. En particulier, on se reportera à la description plus détaillée de la réalisation de la figure 4 pour ces éléments du système 39.

Le procédé de mise en oeuvre du système 39 de contrôle d'intégrité de la poche 1, qui vient d'être décrit, comporte une phase de préparation suivie d'une phase de test.

Dans la phase de préparation, on dispose d'une poche 1 comportant une troisième enveloppe 40 telle que décrite et d'un système 39 tel que décrit. La poche 1, et notamment la première enveloppe 3 peut notamment être emplie de fluide biopharmaceutique 2 ou vide de fluide biopharmaceutique 2. L'entrée d'emplissage 13 et la sortie de vidange 15 de la première enveloppe 3 sont alors à l'état fermé.

On connecte le port 20 de la deuxième enveloppe 4 avec la source 45 de gaz, ce qui est rendu possible du fait d'une ouverture étanche 49, par laquelle passe la ligne d'injection 46, ménagée dans la troisième enveloppe 40 de la poche 1. Grâce à cette connexion, il sera ensuite possible de pouvoir envoyer le gaz sous pression dans l'espace intermédiaire 22.

Dans la phase de test, on envoie le gaz sous pression depuis la source jusque dans l'espace intermédiaire 22 de la deuxième enveloppe 4. Puis, dans une étape ultérieure, on détecte la présence de gaz dans la troisième enveloppe 40, et notamment dans l'espace intermédiaire 43 supplémentaire, grâce à l'élément 48 de détection de gaz.

De la même façon que dans la première réalisation de la figure 4, on peut alors interpréter les résultats du contrôle d'intégrité. Si on ne détecte pas le gaz, on considère que la deuxième enveloppe 4 a satisfait le contrôle d'intégrité. Si, au contraire, on détecte le gaz, on considère que la deuxième enveloppe 4 n'a pas satisfait le contrôle d'intégrité.

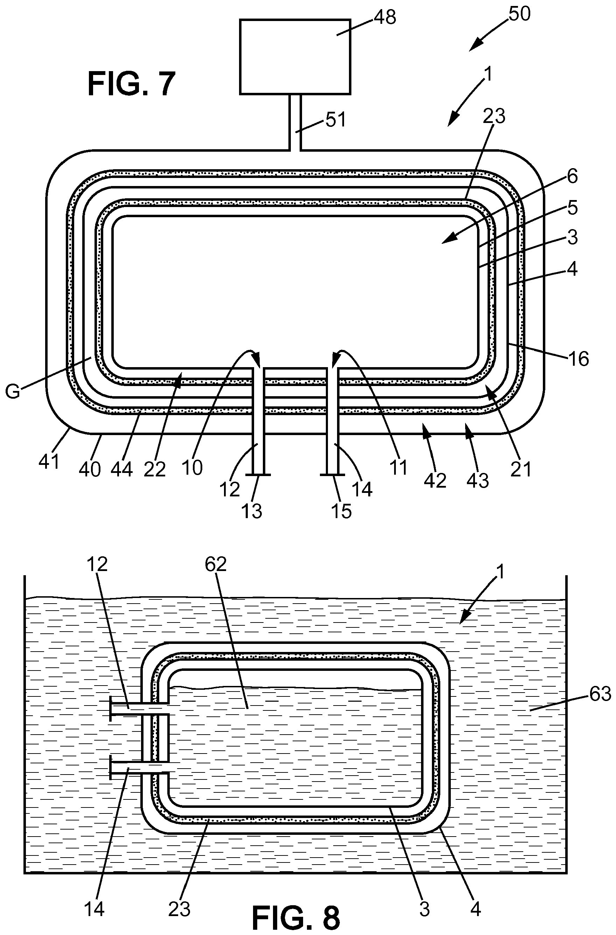

Dans une quatrième réalisation illustrée par la figure 7, on peut utiliser un système 50 pour détecter l'intégrité d'une poche 1 comportant également une troisième enveloppe 40 telle que décrite précédemment.

Dans cette réalisation, l'espace intermédiaire 22 entre la première enveloppe 3 et la deuxième enveloppe 4 comprend préalablement un gaz traceur G. Un tel gaz traceur G est choisi par exemple dans le groupe comprenant l'oxygène, l'azote, le gaz carbonique, l'hexafluorure de soufre (SF6) ou l'hélium. En particulier, le gaz traceur G peut être un mélange d'azote et de gaz carbonique. De façon générale, le gaz traceur G se trouve avec une pression plus grande que la pression présente dans l'espace intermédiaire 43 supplémentaire entre la deuxième enveloppe 4 et la troisième enveloppe 40. De cette façon, la surpression existante dans l'espace intermédiaire 22 permet d'éviter l'introduction de contaminant dans la première et la deuxième enveloppes 3, 4 en cas de trous T, le gaz traceur G s'échappant nécessairement depuis l'intérieur vers l'extérieur de la poche 1.

Comme dans la troisième réalisation de la figure 6, on connecte le port 51 supplémentaire de la troisième enveloppe 40 avec l'élément 48 de détection de gaz.

Dans la phase de test, on détecte la présence de gaz traceur G dans la troisième enveloppe 40, et notamment dans l'espace intermédiaire 43 supplémentaire situé hors de la deuxième enveloppe 4, grâce à l'élément 48 de détection de gaz. De façon analogue à ce qui a été décrit précédemment, on peut alors interpréter les résultats du contrôle d'intégrité. Si on ne détecte pas le gaz, on considère que la deuxième enveloppe 4 a satisfait le contrôle d'intégrité. Si, au contraire, on détecte le gaz, on considère que la deuxième enveloppe 4 n'a pas satisfait le contrôle d'intégrité.

Contrairement aux réalisations décrites précédemment, il n'est pas nécessaire dans cette quatrième réalisation que la deuxième enveloppe 4 comporte elle-même un port 20, notamment destiné à introduire un gaz dans l'espace intermédiaire 22 de la poche 1. En effet, le gaz traceur G est déjà contenu dans l'espace intermédiaire 22 de la poche 1. Ainsi, en cas de perte de stérilité au niveau du port 51 supplémentaire de la troisième enveloppe, le fluide biopharmaceutique 2 reste protégé par la première enveloppe 3 et la deuxième enveloppe 4.

Toutes les réalisations des figures 4 à 7 présentées de façon non limitative comme illustrant l'invention permettent de contrôler l'intégrité de la poche 1 en vérifiant l'étanchéité de la deuxième enveloppe 4. Toutefois, si la deuxième enveloppe 4 n'a pas satisfait un contrôle d'intégrité, on peut prévoir de contrôler par la suite l'intégrité de la poche 1 en vérifiant l'étanchéité de la première enveloppe 3 et/ou de la troisième enveloppe 40 le cas échéant. Ainsi, la poche 1 sera non intègre et donc inapte à recevoir et protéger un fluide biopharmaceutique 2, uniquement si la première enveloppe 1 et la troisième enveloppe 40 ne satisfont pas elles-mêmes le contrôle d'intégrité. En particulier, l'élément intercalaire 23 permet alors d'éviter que la première enveloppe 3 et la deuxième enveloppe 4 soit en contact l'un de l'autre de façon à occulter un trou T de la première enveloppe 3.

Selon une cinquième réalisation, on peut détecter l'intégrité d'une poche 1 selon un procédé bactériologique.

Selon ce procédé, on remplit tout d'abord la première enceinte intérieure 6 de la première enveloppe 3 avec un milieu de culture 62 adapté pour permettre la croissance de bactéries. Le milieu de culture 62 peut par exemple être du lysat de caséine de soja, parfois appelé « bouillon trypticase soja » (Soybean casein digest broth). On ferme alors la poche 1, l'entrée d'emplissage 13 et la sortie de vidange 15 de la première enveloppe 3 étant alors à l'état fermé.

On applique ensuite sur l'extérieur de la poche 1 un milieu bactériologique 63, par exemple sous forme liquide, comprenant des bactéries. Par milieu bactériologique 63, il faut comprendre un milieu comprenant une concentration spécialement élevée de bactéries, ces bactéries étant adaptées pour être mises en croissance dans le milieu de culture 62 compris dans la poche 1. Le milieu bactériologique 63 est de préférence appliqué sur toute la surface extérieure de la deuxième enveloppe 4 ou de la troisième enveloppe 40 le cas échéant. En particulier, on peut appliquer le milieu bactériologique sur la poche 1 en pulvérisant le milieu bactériologique 63 sur la poche 1 ou en immergeant la poche 1 directement dans le milieu bactériologique 63 comme illustré sur la figure 8.

On laisse la poche 1 au contact du milieu bactériologique 63 pendant une période d'attente. En particulier, selon la norme ISO 15747, la poche 1 doit être en contact au minimum 30 minutes avec le milieu bactériologique 63.

On extrait ensuite, partiellement ou non, le milieu de culture 62 de la première enceinte 6 et on met en culture ce milieu de culture 62. En variante on peut filtrer le milieu de culture 62 et mettre en culture le filtrat.

Après une période d'incubation, il est ainsi possible de détecter la présence de bactéries dans le milieu de culture 62. On peut alors interpréter les résultats du contrôle d'intégrité. Si on ne détecte pas de bactéries, on considère que la première enveloppe 3 et/ou la deuxième enveloppe 4 ont satisfait le contrôle d'intégrité tandis que si on détecte des bactéries, on considère que la première enveloppe 3 et la deuxième enveloppe 4 n'ont pas satisfait le contrôle d'intégrité.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

En particulier, une poche 1 selon l'invention peut comprendre plus de trois enveloppes pour contenir le fluide biopharmaceutique 2, chaque enveloppe supplémentaire permettant d'augmenter l'intégrité de la poche 1 et donc de garantir l'absence de contamination du fluide biopharmaceutique 2 qu'elle contient.

## Revendications

1. Poche (1) pour fluide biopharmaceutique (2), comprenant :
- une première enveloppe (3), souple, fermée, étanche, en matière plastique, comportant une paroi (5) délimitant une première enceinte intérieure (6) destinée à recevoir le fluide biopharmaceutique (2), la première enveloppe (3) étant pourvue d'au moins un orifice pour l'emplissage et/ou la vidange (10, 11) du fluide biopharmaceutique (2) et d'au moins un tube d'emplissage et/ou de vidange (12, 14) associé de façon étanche à l'orifice d'emplissage et/ou de vidange (10, 11), le tube d'emplissage et/ou de vidange (12, 14) ayant une entrée d'emplissage et/ou de vidange (13, 15) de la première enceinte intérieure (6),
- une deuxième enveloppe (4), souple, fermée, étanche, en matière plastique, comportant une paroi (16) délimitant une deuxième enceinte intérieure (21) dans laquelle se trouve la première enveloppe (3), la deuxième enceinte intérieure (21) délimitant un espace intermédiaire (22) entre la paroi (5) de la première enveloppe (3) et la paroi (16) de la deuxième enveloppe (4), et
- un élément intercalaire (23) interposé entre la première enveloppe (3) et la deuxième enveloppe (4) dans l'espace intermédiaire (22) apte à éviter qu'un éventuel trou (T) sur la paroi (5) de la première enveloppe (3) ou sur la paroi (16) de la deuxième enveloppe (4) soit occulté,
la poche (1) étant **caractérisée en ce que** la première enveloppe (3), la deuxième enveloppe (4) et l'élément intercalaire (23) forment un tout cohérent, notamment lors de l'utilisation de la poche (1), et **en ce que** le au moins un tube d'emplissage et/ou de vidange (12, 14) traverse la deuxième enveloppe (4) par une liaison étanche, l'entrée d'emplissage et/ou de vidange (13, 15) étant située à l'extérieur de la deuxième enveloppe (4).

2. Poche (1) selon la revendication précédente, dans laquelle l'élément intercalaire (23) est poreux et recouvre intégralement la paroi (5) de la première enveloppe (3).

3. Poche (1) selon l'une quelconque des revendications précédentes, dans laquelle l'élément intercalaire (23) comprend au moins une couche poreuse en tissu, en non tissé, en PE, en PP, en PTFE.

4. Poche (1) selon l'une quelconque des revendications précédentes, dans laquelle l'élément intercalaire (23) est responsif, notamment sensible, au fluide biopharmaceutique (2) qui l'atteint, un élément de détection étant adapté pour détecter une interaction entre l'élément intercalaire (23) et le fluide biopharmaceutique (2).

5. Poche (1) selon l'une quelconque des revendications précédentes, dans laquelle l'élément intercalaire (23) est neutre, notamment non toxique, vis-à-vis du produit biopharmaceutique (2).

6. Poche (1) selon l'une quelconques des revendications précédentes, dans laquelle la paroi (16) de la deuxième enveloppe (4) comprend un port (20) apte à être obturé ou connecté de façon étanche et amovible à une source de gaz ou de fluide (26 ; 34 ; 45).

7. Poche (1) selon l'une quelconque des revendications précédentes, comprenant une troisième enveloppe (40), souple, fermée, étanche, en matière plastique, comportant une paroi (41) délimitant une troisième enceinte intérieure (42) dans laquelle se trouve la deuxième enveloppe (4), la troisième enveloppe (40) délimitant un espace intermédiaire supplémentaire (43) entre la paroi (16) de la deuxième enveloppe (4) et la paroi (41) de la troisième enveloppe (40), la poche (1) comprenant également un élément intercalaire (44) interposé entre la deuxième enveloppe (4) et la troisième enveloppe (40) apte à éviter qu'un éventuel trou (T) soit occulté sur la paroi (16) de la deuxième enveloppe (4) ou sur la paroi (41) de la troisième enveloppe (40).

8. Poche selon la revendication 7, dans laquelle la première enveloppe (3), la deuxième enveloppe (4), la troisième enveloppe (40) et les éléments intercalaires (23, 44) forment un tout cohérent, notamment lors de l'utilisation de la poche (1).

9. Poche selon la revendication 7 ou 8, dans laquelle le tube d'emplissage et/ou de vidange (12, 14) traverse la troisième enveloppe (40) par une liaison étanche, l'entrée d'emplissage et/ou de vidange (13, 15) étant située à l'extérieur de la troisième enveloppe (40).

10. Poche (1) selon l'une quelconques des revendications 7 à 9, dans laquelle l'espace intermédiaire (22) est empli par un gaz traceur (G) à une pression plus grande que la pression présente dans l'espace intermédiaire supplémentaire (43) et dans la première enceinte intérieure (6).

11. Système (32) pour le contrôle d'intégrité d'une poche (1), **caractérisé en ce qu'**il comprend :
- une poche (1) selon l'une quelconque des revendications 1 à 6,
- une source (34) de gaz sous pression destiné à être introduit dans l'espace intermédiaire (22) de la poche (1),
- un élément (36) de mesure de la pression du gaz dans l'espace intermédiaire (22) permettant la comparaison de la chute de pression dans l'espace intermédiaire (22) une fois gonflée par rapport un seuil prédéfini de chute de pression, et
- deux plaques (33A, 33B) fixes de limitation d'expansion, écartées et en regard l'une de l'autre, aptes à ne pas occulter une éventuelle fuite dans la paroi (16) de la deuxième enveloppe (4) placée contre elles.

12. Procédé de contrôle d'intégrité d'une poche (1) afin de détecter l'existence d'un éventuel trou (T), dans lequel :
- dans une phase de préparation :
∘ on dispose d'un système (32) pour le contrôle d'intégrité selon la revendication 11,
∘ on place la poche (1) entre les deux plaques (33A, 33B) de limitation d'expansion,
∘ on connecte l'au moins un port (20) de la deuxième enveloppe (4) avec la source (34) de gaz et l'élément (36) de mesure de pression, de manière à pouvoir envoyer le gaz sous pression dans l'espace intermédiaire (22),
- dans une phase de test :
∘ on envoie le gaz sous pression dans l'espace intermédiaire (22), l'expansion de la poche (1) étant limitée lorsque la paroi (16) de la deuxième enveloppe (4) vient contre les plaques (33A, 33B) de limitation d'expansion,
puis, dans une étape ultérieure, on compare la chute de pression dans l'espace intermédiaire (22) grâce à l'élément (36) de mesure de pression par rapport au seuil prédéfini de manière que si la chute de pression dans l'espace intermédiaire (22) est inférieure au seuil, on considère que la deuxième enveloppe (4) a satisfait le contrôle d'intégrité tandis que si la chute de pression dans l'espace intermédiaire (22) est supérieure au seuil, on considère que la deuxième enveloppe (4) n'a pas satisfait le contrôle d'intégrité.

13. Système (24 ; 39 ; 50) pour le contrôle d'intégrité d'une poche (1), **caractérisé en ce qu'**il comprend un élément (29 ; 48) de détection de gaz et une poche (1) selon l'une quelconque des revendications 1 à 10.

14. Procédé de contrôle d'intégrité d'une poche (1) afin de détecter l'existence d'un éventuel trou (T), dans lequel :
- dans une phase de préparation :
∘ on dispose d'un système (24 ; 39 ; 50) pour le contrôle d'intégrité selon la revendication 13,
- dans une phase de test :
∘ on détecte la présence de gaz à l'extérieur de la deuxième enveloppe (4) grâce à l'élément (29 ; 48) de détection de gaz de manière que si on ne détecte pas le gaz, on considère que la deuxième enveloppe (4) a satisfait le contrôle d'intégrité tandis que si on détecte le gaz, on considère que la deuxième enveloppe (4) n'a pas satisfait le contrôle d'intégrité.

15. Procédé de contrôle d'intégrité d'une poche (1) afin de détecter un éventuel trou (T), dans lequel :
- on dispose d'une poche (1) selon l'une quelconque des revendications 1 à 5 ou 7 à 9 dans laquelle on remplit la première enceinte intérieure (6) avec un milieu de culture (62) adapté pour permettre la croissance de bactéries,
- on ferme la poche (1),
- on applique sur l'extérieur de la poche (1) un milieu bactériologique (63),
- on met en culture le milieu de culture (62) remplissant la première enceinte (6) et on détecte la présence de bactéries dans le milieu de culture (62), de manière que si on ne détecte pas de bactéries, on considère que la première enveloppe (3) et/ou la deuxième enveloppe (4) a satisfait le contrôle d'intégrité tandis que si on détecte des bactéries, on considère que la première enveloppe (3) et la deuxième enveloppe (4) n'ont pas satisfait le contrôle d'intégrité.

## Patentansprüche

1. Tasche (1) für biopharmazeutisches Fluid (2), umfassend:
- eine biegsame, geschlossene, dichte erste Hülle (3) aus Kunststoffmaterial, umfassend eine Wand (5), die eine erste innere Kammer (6) begrenzt, welche zur Aufnahme des biopharmazeutischen Fluids (2) bestimmt ist, wobei die erste Hülle (3) mit mindestens einer Öffnung zum Einfüllen oder/und Entleeren (10, 11) des biopharmazeutischen Fluids (2) und mindestens einem Einfüll- oder/und Entleerungsrohr (12, 14) ausgestattet ist, das dicht mit der Öffnung zum Einfüllen oder/und Entleeren (10, 11) verbunden ist, wobei das Einfüll- oder/und Entleerungsrohr (12, 14) einen Einfüll- oder/und Entleerungseinlass (13, 15) für die erste innere Kammer (6) aufweist,
- eine biegsame, geschlossene, dichte zweite Hülle (4) aus Kunststoffmaterial, umfassend eine Wand (16), die eine zweite innere Kammer (21) begrenzt, in der sich die erste Hülle (3) befindet, wobei die zweite innere Kammer (21) einen Zwischenraum (22) zwischen der Wand (5) der ersten Hülle (3) und der Wand (16) der zweiten Hülle (4) begrenzt, und
- ein Zwischenelement (23), das zwischen der ersten Hülle (3) und der zweiten Hülle (4) in dem Zwischenraum (22) angeordnet ist, um zu verhindern, dass ein eventuelles Loch (T) an der Wand (5) der ersten Hülle (3) oder an der Wand (16) der zweiten Hülle (4) verborgen ist/wird,
wobei die Tasche (1) **dadurch gekennzeichnet ist, dass** die erste Hülle (3), die zweite Hülle (4) und das Zwischenelement (23) ein zusammenhängendes Ganzes bilden, insbesondere bei der Verwendung der Tasche (1), und dadurch, dass das mindestens eine Einfüll- oder/und Entleerungsrohr (12, 14) über eine dichte Verbindung die zweite Hülle (4) durchquert, wobei der Einfüll- oder/und Entleerungseinlass (13, 15) außerhalb der zweiten Hülle (4) angeordnet ist.

2. Tasche (1) nach dem vorhergehenden Anspruch, wobei das Zwischenelement (23) porös ist und die Wand (5) der ersten Hülle (3) vollständig bedeckt.

3. Tasche (1) nach einem der vorhergehenden Ansprüche, wobei das Zwischenelement (23) mindestens eine poröse Schicht aus Stoff, aus Vlies, aus PE, aus PP, aus PTFE umfasst.

4. Tasche (1) nach einem der vorhergehenden Ansprüche, wobei das Zwischenelement (23) auf das biopharmazeutische Fluid (2), das es erreicht, anspricht, insbesondere dafür empfindlich ist, wobei ein Detektionselement dazu ausgebildet ist, eine Wechselwirkung zwischen dem Zwischenelement (23) und dem biopharmazeutischen Fluid (2) zu detektieren.

5. Tasche (1) nach einem der vorhergehenden Ansprüche, wobei das Zwischenelement (23) gegenüber dem biopharmazeutischen Produkt (2) neutral ist, insbesondere nicht toxisch.

6. Tasche (1) nach einem der vorhergehenden Ansprüche, wobei die Wand (16) der zweiten Hülle (4) einen Anschluss (20) aufweist, der dazu geeignet ist, verschlossen oder in dichter und lösbarer Weise mit einer Quelle für Gas oder Fluid (26; 34; 45) verbunden zu werden.

7. Tasche (1) nach einem der vorhergehenden Ansprüche, umfassend eine biegsame, geschlossene, dichte dritte Hülle (40) aus Kunststoffmaterial, mit einer Wand (41), die eine dritte innere Kammer (42) begrenzt, in der sich die zweite Hülle (4) befindet, wobei die dritte Hülle (40) einen zusätzlichen Zwischenraum (43) zwischen der Wand (16) der zweiten Hülle (4) und der Wand (41) der dritten Hülle (40) begrenzt, wobei die Tasche (1) auch ein Zwischenelement (44) aufweist, das zwischen der zweiten Hülle (4) und der dritten Hülle (40) angeordnet ist, um zu verhindern, dass ein eventuelles Loch (T) an der Wand (16) der zweiten Hülle (4) oder an der Wand (41) der dritten Hülle (40) verborgen ist/wird.

8. Tasche nach Anspruch 7, bei der die erste Hülle (3), die zweite Hülle (4), die dritte Hülle (40) und die Zwischenelemente (23, 44) ein zusammenhängendes Ganzes bilden, insbesondere bei der Verwendung der Tasche (1).

9. Tasche nach Anspruch 7 oder 8, bei der das Einfüll- oder/und Entleerungsrohr (12, 14) über eine dichte Verbindung die dritte Hülle (40) durchquert, wobei der Einfüll- oder/und Entleerungseinlass (13, 15) außerhalb der dritten Hülle (40) angeordnet ist.

10. Tasche (1) nach einem der Ansprüche 7 bis 9, wobei der Zwischenraum (22) mit einem Prüfgas (G) bei einem Druck gefüllt ist, der größer als der Druck ist, der im zusätzlichen Zwischenraum (43) und in der ersten inneren Kammer (6) vorliegt.

11. System (32) zum Prüfen der Unversehrtheit einer Tasche (1), **dadurch gekennzeichnet, dass** es umfasst:
- eine Tasche (1) nach einem der Ansprüche 1 bis 6,
- eine Quelle (34) für Gas unter Druck, das dazu bestimmt ist, in den Zwischenraum (22) der Tasche (1) eingeleitet zu werden,
- ein Druckmesselement (36) für das Gas in dem Zwischenraum (22), welches den Vergleich des Druckabfalls in dem Zwischenraum (22) im aufgeblähten Zustand in Bezug auf eine vordefinierte Druckabfall-Schwelle erlaubt, und
- zwei feste Ausdehnungsbegrenzungsplatten (33A, 33B), die voneinander beabstandet sind und einander gegenüberliegen, und die dazu geeignet sind, eine eventuelle Undichtigkeit in der Wand (16) der zweiten Hülle (4), die an ihnen anliegt, nicht zu verbergen.

12. Verfahren zum Prüfen der Unversehrtheit einer Tasche (1), um die Existenz eines eventuellen Lochs (T) zu detektieren, wobei:
- in einer Vorbereitungsphase:
∘ ein System (32) zum Prüfen der Unversehrtheit nach Anspruch 11 bereitgestellt wird,
∘ die Tasche (1) zwischen den zwei Ausdehnungsbegrenzungsplatten (33A, 33B) angeordnet wird,
∘ der mindestens eine Anschluss (20) der zweiten Hülle (4) mit der Quelle (34) für Gas und dem Druckmesselement (36) verbunden wird, so dass das Gas unter Druck in den Zwischenraum (22) geleitet werden kann,
- in einer Testphase:
∘ das Gas unter Druck in den Zwischenraum (22) geleitet wird, wobei die Ausdehnung der Tasche (1) begrenzt wird, wenn die Wand (16) der zweiten Hülle (4) gegen die Ausdehnungsbegrenzungsplatten (33A, 33B) stößt,
wobei dann, in einem späteren Schritt, der Druckabfall in dem Zwischenraum (22) mit dem Druckmesselement (36) in Bezug auf die vordefinierte Schwelle in der Weise verglichen wird, dass dann, wenn der Druckabfall in dem Zwischenraum (22) unterhalb der Schwelle liegt, davon ausgegangen wird, dass die zweite Hülle (4) die Prüfung der Unversehrtheit bestanden hat, wohingegen dann, wenn der Druckabfall in dem Zwischenraum (22) oberhalb der Schwelle liegt, davon ausgegangen wird, dass die zweite Hülle (4) die Prüfung der Unversehrtheit nicht bestanden hat.

13. System (24; 39; 50) zum Prüfen der Unversehrtheit einer Tasche (1), **dadurch gekennzeichnet, dass** es ein Gasdetektionselement (29; 48) und eine Tasche (1) gemäß einem der Ansprüche 1 bis 10 aufweist.

14. Verfahren zum Prüfen der Unversehrtheit einer Tasche (1) zum Detektieren der Existenz eines eventuellen Lochs (T), wobei:
- in einer Vorbereitungsphase:
∘ ein System (24; 39; 50) zum Prüfen der Unversehrtheit nach Anspruch 13 bereitgestellt wird,
- in einer Testphase:
∘ das Vorliegen von Gas außerhalb der zweiten Hülle (4) mit dem Gasdetektionselement (29; 48) in der Weise detektiert wird, dass dann, wenn das Gas nicht detektiert wird, davon ausgegangen wird, dass die zweite Hülle (4) die Prüfung der Unversehrtheit bestanden hat, wohingegen dann, wenn das Gas detektiert wird, davon ausgegangen wird, dass die zweite Hülle (4) die Prüfung der Unversehrtheit nicht bestanden hat.

15. Verfahren zum Prüfen der Unversehrtheit einer Tasche (1) zum Detektieren eines eventuellen Lochs (T), wobei:
- eine Tasche (1) nach einem der Ansprüche 1 bis 5 oder 7 bis 9 bereitgestellt wird, wobei die erste innere Kammer (6) mit einem Kulturmedium (62) gefüllt wird, welches dazu ausgebildet ist, das Wachstum von Bakterien zu ermöglichen,
- die Tasche (1) geschlossen wird,
- außerhalb der Tasche (1) ein bakteriologisches Medium (63) bereitgestellt wird,
- das Kulturmedium (62) kultiviert wird, welches die erste Kammer (6) füllt, und das Vorliegen von Bakterien im Kulturmedium (62) in der Weise detektiert wird, dass dann, wenn keine Bakterien detektiert werden, davon ausgegangen wird, dass die erste Hülle (3) oder/und die zweite Hülle (4) die Prüfung der Unversehrtheit bestanden hat/haben, wohingegen dann, wenn Bakterien detektiert werden, davon ausgegangen wird, dass die erste Hülle (3) und die zweite Hülle (4) die Prüfung der Unversehrtheit nicht bestanden haben.

## Claims

1. A bag (1) for biopharmaceutical fluid (2), comprising:
- a first envelope (3) which is flexible, closed, fluidtight, and made of plastic, having a wall (5) defining a first inner chamber (6) intended for receiving the biopharmaceutical fluid (2), the first envelope (3) being provided with at least one fill and/or discharge orifice (10, 11) for filling and/or discharging the biopharmaceutical fluid (2) and at least one fill and/or discharge tube (12, 14) associated in a fluidtight manner with the fill and/or discharge orifice (10, 11), the fill and/or discharge tube (12, 14) having an inlet for filling and/or discharging (13, 15) the first inner chamber (6),
- a second envelope (4) which is flexible, closed, fluidtight, and made of plastic, having a wall (16) defining a second inner chamber (21) within which the first envelope (3) is located, the second inner chamber (21) defining an intermediate space (22) between the wall (5) of the first envelope (3) and the wall (16) of the second envelope (4), and
- a spacer element (23) interposed between the first envelope (3) and the second envelope (4), in the intermediate space (22), suitable for preventing a possible hole (T) in the wall (5) of the first envelope (3) or in the wall (16) of the second envelope (4) from being covered,
the bag (1) being **characterized in that** the first envelope (3), the second envelope (4), and the spacer element (23) form a coherent whole, in particular during use of the bag (1), and **in that** the at least one fill and/or discharge tube (12, 14) traverses the second envelope (4) by a fluidtight connection, the fill and/or discharge inlet (13, 15) being located outside the second envelope (4).

2. Bag (1) according to the preceding claim, wherein the spacer element (23) is porous and completely covers the wall (5) of the first envelope (3).

3. Bag (1) according to any one of the preceding claims, wherein the spacer element (23) comprises at least one porous layer of woven fabric, non-woven fabric, PE, PP, or PTFE.

4. Bag (1) according to any one of the preceding claims, wherein the spacer element (23) is responsive, in particular sensitive, to the biopharmaceutical fluid (2) that reaches it, a detection member being provided to detect an interaction between the spacer element (23) and the biopharmaceutical fluid (2).

5. Bag (1) according to any one of the preceding claims, wherein the spacer element (23) is neutral, in particular non-toxic, to the biopharmaceutical product (2).

6. Bag (1) according to any one of the preceding claims, wherein the wall (16) of the second envelope (4) comprises a port (20) suitable for being closed or connected in a fluidtight and removable manner to a source of gas or fluid (26; 34; 45).

7. Bag (1) according to any one of the preceding claims, comprising a third envelope (40) which is flexible, closed, fluidtight, and made of plastic, having a wall (41) defining a third inner chamber (42) in which the second envelope (4) is located, the third envelope (40) defining an additional intermediate space (43) between the wall (16) of the second envelope (4) and the wall (41) of the third envelope (40), the bag (1) further comprising a spacer element (44) interposed between the second envelope (4) and the third envelope (40) suitable for preventing a possible hole (T) from being covered in the wall (16) of the second envelope (4) or in the wall (41) of the third envelope (40).

8. Bag (1) according to claim 7, wherein the first envelope (3), the second envelope (4), the third envelope (40), and the spacer elements (23, 44) form a coherent whole, in particular during use of the bag (1).

9. Bag according to claim 7 or 8, wherein the fill and/or discharge tube (12, 14) traverses the third envelope (40) by a fluidtight connection, the fill and/or discharge inlet (13, 15) being located outside the third envelope (40).

10. Bag (1) according to any one of claims 7 to 9, wherein the intermediate space (22) is filled with a tracer gas (G) at a pressure greater than the pressure present in the additional intermediate space (43) and in the first inner chamber (6).

11. System (32) for verifying the integrity of a bag (1), **characterized in that** it comprises:
- a bag (1) according to any one of claims 1 to 6,
- a source (34) of pressurized gas intended to be introduced into the intermediate space (22) of the bag (1),
- a member (36) for measuring the pressure of the gas in the intermediate space (22) in order to compare the pressure drop in the intermediate space (22) once inflated, relative to a predefined pressure drop threshold, and
- two fixed expansion-limiting plates (33A, 33B), spaced apart from and facing one another, suitable for not obstructing any leak in the wall (16) of the second envelope (4) placed against them.

12. Method for verifying the integrity of a bag (1) in order to detect the existence of a possible hole (T), wherein:
- in a preparation phase:
∘ a system (32) for verifying integrity according to claim 11 is provided,
∘ the bag (1) is placed between the two expansion-limiting plates (33A, 33B),
∘ the at least one port (20) of the second envelope (4) is connected to the source (34) of gas and the pressure measurement member (36), in order to be able to send the pressurized gas into the intermediate space (22),
- in a test phase:
∘ the pressurized gas is sent into the intermediate space (22), the expansion of the bag (1) being restricted when the wall (16) of the second envelope (4) encounters the expansion-limiting plates (33A, 33B),
∘ then, in a subsequent step, the pressure drop in the intermediate space (22) is compared to the predefined threshold by means of the pressure measurement member (36), such that if the pressure drop in the intermediate space (22) is less than the threshold the second envelope (4) is considered to have passed the integrity verification, whereas if the pressure drop in the intermediate space (22) is greater than the threshold the second envelope (4) is considered not to have passed the integrity verification.

13. System (24; 39; 50) for monitoring the integrity of a bag (1), wherein it comprises a gas detection member (29; 48) and a bag (1) according to any one of claims 1 to 10.

14. Method for verifying the integrity of a bag (1) in order to detect the existence of a possible hole (T), wherein:
- in a preparation phase:
∘ a system (24; 39; 50) for verifying integrity according to claim 13 is provided,
- in a test phase:
∘ the presence of gas outside the second envelope (4) is detected by means of the gas detection member (29; 48), such that if the gas is not detected the second envelope (4) is considered to have passed the integrity verification, whereas if the gas is detected the second envelope (4) is considered not to have passed the integrity verification.

15. Method for verifying the integrity of a bag (1) in order to detect a possible hole (T), wherein:
- a bag (1) according to any one of claims 1 to 5 or 7 to 9 is provided, wherein the first inner chamber (6) is filled with a culture medium (62) suitable for allowing the growth of bacteria,
- the bag (1) is closed,
- a bacteriological medium (63) is applied to the exterior of the bag (1),
- the culture medium (62) filling the first chamber (6) is cultured and detection of the presence of bacteria in the culture medium (62) is performed, such that if bacteria are not detected the first envelope (3) and/or the second envelope (4) are considered to have passed the integrity verification, whereas if bacteria are detected the first envelope (3) and the second envelope (4) are considered not to have passed the integrity verification.
